# EUROPEAN PATENT APPLICATION

(11) **EP 1 953 686 A1**
(43) Date of publication of application: **06.08.2008**
(21) Application number: 07011597.7
(22) Date of filing: 13.06.2007
(51) Int. Cl.: G06Q 10/00

(54) **A method and an apparatus for identifying an instance of a variability meta-model and for processing change requests**

(30) Priority: 31.01.2007 EP 07002131
(71) Applicant: SIEMENS AKTIENGESELLSCHAFT, 80333 München (DE)
(72) Inventor: Bruegge, Bernd, 82340 Feldafing (DE); Thurimella, Anil Kumar, 80637 München (DE)

(57) **Abstract**

The invention relates to a method and an apparatus for processing a variability model of a product line, wherein a decision is derived on the basis of a predetermined negotiation model. In one embodiment, an instance of a variability meta-model VMM which models a variability in domain requirements is identified on the basis of a QOC-rationale model. In a further embodiment, a decision for a question on an instantiation for a variation point VP of a variability meta-model VMM instance is generated on the basis of a predetermined negotiation model. In a further embodiment, change requests CR to change a variability model of a product line are processed to derive a decision whether to accept one or more change requests CR on the basis of a predetermined negotiation model which is formed by a questions, options and criteria (QOC) EasyWinWin model.

## Description

The invention relates to a method for identifying an instance of a variability meta-model (VMM) which models a variability in domain requirements and to a method for performing change requests.

### BACKGROUND OF THE INVENTION

Effective product family-based development depends on exploiting a communality and a variability in customary requirements. The desirability of variability in products is driven by the needs of various target market segments identified by various organisational units like sales and marketing. Variability management can be seen as a key aspect that differentiates conventional software engineering from software product line engineering. The ability in a product family can be defined as a measure of how members of a family may differ from each other. Variability is made explicit by using so-called variation points. Variation points are places in the design artefacts where a specific decision is narrowed to several options but the option to be chosen for a particular system is left open. The identification of points of variability is crucial in proliferating variety from a single product platform. The product family development process involves managing variations among different members of the family by identifying common and variable aspects in the domain under consideration.

Software product line engineering is gaining importance in the industry to overcome the complexity and variety of a product line. A particular characteristic of product line engineering is the pro-active definition of variability engineering to enable a strategic re-use of the selected variants in application engineering.

In fact many companies often produce products which form a part of a product line PL. Products belonging to one product line have a lot of components in common. This product line approach allows the exploitation of commonalities between different products as an additional re-use is supported. Despite commonalities products can comprise a lot of variabilities i.e. components that vary from product to product, in product lines. The main issue for product line approaches is to manage the respective variability.

An orthogonal variability model (OVM) is a way of variability modelling and is based on a variability meta model (VMM).

A conventional variability meta-model VMM can be used to describe a variability and can serve as a basis of variability management. In requirements engineering lots of decisions are to be taken and the knowledge behind these decisions, i.e. implicit knowledge, is important, too. Rationale methods try to capture this implicit knowledge and provide argumentation-based justification of decisions. A so-called QOC-model (questions, options, and criteria) is used to capture rationale information in the form of a model.

Evolution in requirements engineering refers to the changes that take place in a set of requirements over time. As requirements engineering is an early phase of software life cycle, evolution in requirements engineering reflects the early and core changes that can be captured in the product evolution. Therefore, handling evolutions in requirements engineering is critical. Evolutions in product requirements originate from the oscillations that occur in the sources of requirements such as business, marketing, technology, development and project environment. Since these oscillations which occur at a specific point of time and direct the product evolution at that point of time, are unpredictable as well as uncontrollable, product evolution is challenging. As the requirements originate from many sources, the changes triggered by oscillations in different sources of requirements can be conflicting. Adding to these conflicts the communication problem between different stakeholders make the evolution of requirements very complex. If one considers a product line PL, the belonging products P have a lot of components in common (commonalities). Product line approaches organize the assets of the domain so that they can be reused in future. So handling evolution in product line requirements engineering is very important. Using product line approaches, allows the exploitation of the commonalities between different products, additionally reuse can be supported. Despite commonalities, products do have lots of variabilities (components that vary from product to product) in product lines PL. A main issue in product line approaches is to manage this variability. Variability models VM are used to capture the variability and can serve as a basis of variability management. As evolutions can affect variability models, evolution in product line requirements engineering is even more complex to product requirements engineering. In requirements engineering lots of decisions are to be taken, and the knowledge behind these decisions (implicit knowledge) is important, too.

In a conventional product line requirements engineering environment variability management is usually included, however, rationale methods which capture implicit knowledge behind decisions, which provide an argumentation-based justification of these decisions are not considered so far in this context.

### SUMMARY OF THE INVENTION

The invention provides a method for processing a variability model of a product line, wherein a decision is derived on the basis of a predetermined negotiation model.

In one embodiment of the method according to the present invention an instance of a variability meta-model which models a variability in domain requirements is identified on the basis of a QOC-rationale model.

The invention provides a method for identifying an instance of a variability meta-model VMM which models a variability in domain requirements, wherein the method comprises the steps of:
(a) providing at least one set of variants V each describing an object of variation and having a corresponding variation point VP indicating a variability between said variants V, wherein each variant V is connected to at least one domain requirement;
(b) generating QOC-rational model instances related to said domain requirements;
(c) deriving a justification matrix for each generated QOC-rational model instance; and
(d) generating a decision for each justification matrix,
wherein each decision comprises a variability link element VLE which is included automatically into the variability model instance.

In one embodiment of the method according to the present invention the variability link element is formed by an alternative choice cardinality indicating a minimum and a maximum number of selectable variants.

In one embodiment of the method according to the present invention the variability link element is formed by a constraint dependency.

In one embodiment of the method according to the present invention the variability link element is formed by a variability dependency.

In one embodiment of the method according to the present invention the constraint dependency indicates that a selection of a variation point or variant presumes the selection of another variation point or a variant prohibits the selection of another variation point or variant.

In one embodiment of the method according to the present invention the variability dependency is formed by an optional variability dependency or by a mandatory variability dependency.

In one embodiment of the method according to the present invention the generated QOC-rationale model instance comprises questions, options, criteria and arguments given by stakeholders.

In one embodiment of the method according to the present invention the derived justification matrix comprises for each combination of an option and of a criterion of the generated QOC-rationale model instance an argument indicating a justification of the respective option to fulfil the respective criterion.

In one embodiment of the method according to the present invention the justification matrix comprises a rationale for the variability link element.

In one embodiment of the method according to the present invention the criteria are formed by non-functional requirements.

The invention further provides an apparatus for processing a variability model of a product line, wherein a decision is derived automatically on the basis of a predetermined negotiation model.

In an embodiment of the apparatus according to the present invention, the decision is derived on the basis of a QOC-rationale model instance and comprises a variability link element which is included automatically into a variability model instance.

In an embodiment of the apparatus according to the present invention, the decision is derived on the basis of QOC-rationale model instance and comprises instantiated variants of a variability model instance.

The invention further provides a method for performing a product instantiation on the basis of a variability meta-model instance having variants each describing an object of variation and variation points indicating a variability between the variants, wherein the method comprises the steps of:
(a) generating a QOC-model instance of the product by
(a1) providing a question on an instantiation for each variation point VP of the variability meta model instance;
(a2) selecting automatically a subset of variants V of the respective variation point VP depending on constraint dependencies and on variability dependencies of the variability meta model instance;
(a3) generating automatically an option for each variant V of the selected subset of said variants V;
(a4) and by eliciting criteria for the product instantiation and deriving arguments for the elicited criteria and generated options;
(b) transforming the generated QOC-model instance for the product into a corresponding justification matrix which comprises for each combination of an option and of a criterion an argument indicating a justification of the respective option to fulfil the corresponding criterion; and
(c) generating a decision for the provided question from the justification matrix,
wherein the decision comprises instantiated variants.

In one embodiment of the method according to the present invention the criteria for the product instantiation are product specific non-functional requirements.

In one embodiment of the method according to the present invention, the QOC-model instance forms a generic way to resolve variability, i.e. to perform product instantiation.

The invention further provides an apparatus for identifying an instance of a variability meta-model which models a variability in domain requirements,
wherein the apparatus comprises:
(a) means for providing at least one set of variants each describing an object of variation and having a corresponding variation point VP indicating a variability between said variants,
   wherein each variant is connected to at least one domain requirement;
(b) means for generating QOC-rationale model instances related to said domain requirements;
(c) means for deriving a justification matrix for each generated QOC-rational model instance; and
(d) means for generating a decision for each justification matrix,
wherein each decision comprises a variability link element which is included automatically into the variability model instance.

The invention further provides an apparatus for performing a product instantiation on the basis of a variability meta-model instance having variants each describing an object of variation and variation points indicating a variability between the variants,
wherein the apparatus comprises:
(a) means for generating a QOC-model instance of the product having:
(al) means for providing a question on an instantiation for each variation point of the variability meta-model instance;
(a2) means for selecting automatically a sub-set of variants V of the respected variation point VP depending on constraint dependencies and on variability dependencies of the variability meta-model instance;
(a3) means for generating automatically an option for each variant V of the selected sub-set of said variants V;
(a4) and means for eliciting criteria for the product instantiation and deriving arguments for the elicited criteria and generated options;
(b) means for transforming the generated QOC-model instance for the product into a corresponding justification matrix which comprises for each combination of an option and of a criterion an argument indicating a justification of the respective option to fulfil the corresponding criterion;
(c) means for generating a decision for the provided question Q from the justification matrix,
wherein the decision comprises instantiated variants V.

The invention further provides a method for processing change requests (CR) to change a variability model (VM) of a product line (PL) comprising the steps of:
- selecting change requests (CR) of stakeholders;
- providing evolution criteria (EC) for the evolution of the variability model (VM) using a negotiation model;
- inputting arguments by stakeholders into a justification matrix (JM) generated for the selected change requests (CR) and the derived evolution criteria (EC); and
- evaluating the justification matrix (JM) to derive a decision whether to accept one or more of said change requests.

In one embodiment of the method according to the present invention, the change requests (CR) are selected according to their priority by a project manager of said product line (PL).

In one embodiment of the method according to the present invention, the negotiation model is formed by a questions, options and criteria (QOC) EasyWinWin model.

In one embodiment of the method according to the present invention, the variability model (VM) is updated automatically depending on the derived decision.

The invention further provides an apparatus for processing change requests (CR) to change a variability model (VM) of a product line (PL) wherein said apparatus comprises:
- means for selecting change requests (CR) of stakeholders;
- means for deriving evolution criteria (EC) for evolution of the variability model (VM) using a negotiation model;
- means for inputting arguments by stakeholders into a justification matrix (JM) generated for the selected change requests (CR) and the derived evolution criteria (EC); and
- means for evaluating said justification matrix (JM) to derive a decision whether to accept one or more of said change requests (CR).

The invention further provides a method for processing change requests (CR) to change a variability model (VM) of a product line (PL), wherein a decision whether to accept one or more of said change requests is derived on the basis of a negotiation model.

The invention further provides a distributed computer system for processing change requests (CR) to change a variability model (VM) of a product line (PL), wherein a decision whether to accept one or more of the change requests (CR) is derived on the basis of a negotiation model.

In an embodiment of the distributed computer system said negotiation model is a questions, options and criteria (QOC) EasyWinWin model.

### BRIEF DESCRIPTION OF THE FIGURES

Figure 1 shows a general variability meta-model VMM as used by the method according to the present invention;
Figure 2 shows a QOC-rationale model as used by the method according to the present invention;
Figures 3A, 3B, 3C show rationale-based variability meta-model for variability constraints, for Product Instantiation and for Variability Dependencies as used in embodiments of the method according to the present invention;
Figure 4 shows an EasyWinWin Negotiation Model as used in embodiments of the method according to the present invention;
Figure 5 shows an example for a variability model;
Figure 6 shows an example for an instantiation of a rationale-based variability meta-model for variability constraints or constraints dependency as an instantiation of the model in fig. 3A;
Figure 7 shows an example for an instantiation of a rationale-based variability meta-model for a variability constraints for an alternative choice as an example for the model shown in figure 3A;
Figure 8 shows an instantiation of a rationale-based variability meta-model for product instantiation as an instantiation of the model shown in fig. 4;
Figure 9 shows an activity diagram as an example for a product line evolution;
Figure 10 shows an example for a taxonomy of evolution criteria as used by the method according to the present invention;
Figure 11 shows an UML-class diagram of a QOC-EasyWinWin model as employed by the method according to the present invention;
Figure 12 shows a model for a justification of changes represented as an UML-class diagram as employed by the method according to the present invention;
Figure 13 shows a variability of a microwave oven using the implementation of a orthogonal variability model (OFM) as an example for illustrating the functionality of the method according to the present invention;
Figure 14 shows a variability model for performing evaluated changes according to an embodiment of the method according to the present invention;
Figure 15 shows a flowchart of a possible embodiment of a method for identifying an instance of a variability meta model according to the present invention;
Figure 16 shows a flowchart of a method for performing a product instantiation on the basis of a variability meta model instance according to an embodiment of the present invention;

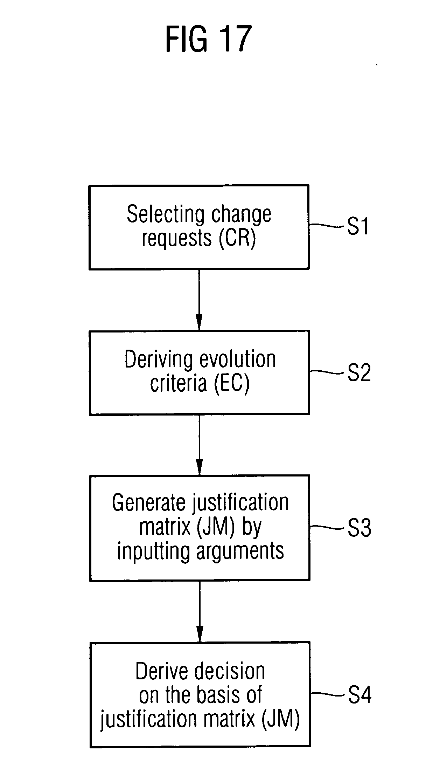

Figure 17 shows a flowchart of a method for processing change requests to change a variability model according to an embodiment of the present invention.

### DETAILED DESCRIPTION OF EMBODIMENTS

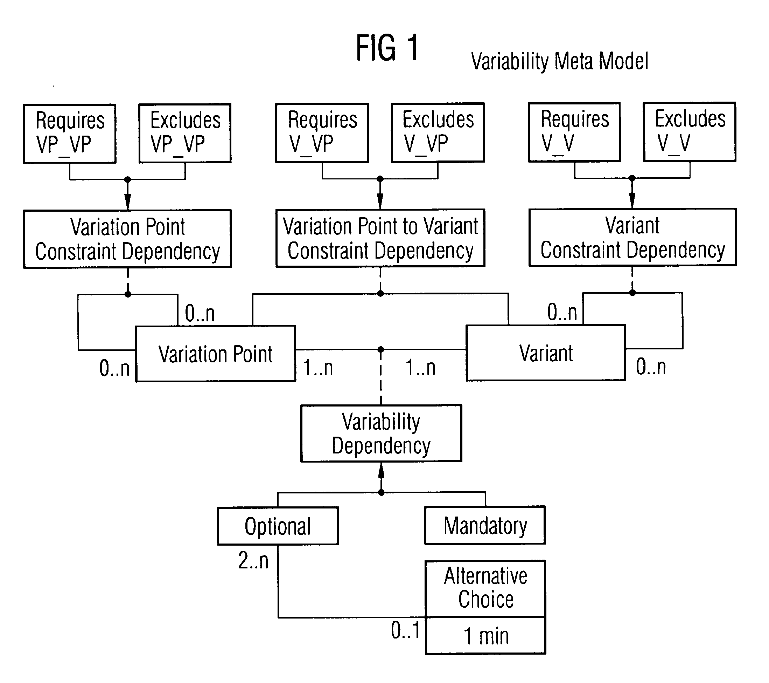

As can be seen from fig. 1 the variability meta-model VMM as shown in fig. 1 includes as elements a variation point VP describing a subject of variation wherein the variation point VP indicates a variability between variants V. The variation point VP captures a location and a reason of variation. Furthermore, the variability meta-model VMM includes variants V. A variant V describes an object of variation. Whereas a subject of variation is described by a variation point VP corresponding objects variation are described by variants V. Variants V capture different possibilities of variation.

A relation between a variation point VP and a variant V is called variability dependency. Variability dependency is either alternative, optional or mandatory. The optional variability dependency indicates that a variant V can be selected or left out at the variation point VP. A mandatory variability dependency indicates that a variant V has to be part of a variation point VP. An alternative choice cardinality indicates a minimum and a maximum number of selectable variants V, i.e. cardinalities show a minimum and a maximum of variants for a variation point VP which can be selected. Whereas the relation between a variation point VP and a variant V is called variability dependency the relation between two variation points VP or variants V and between a variant V a variation point VP is called a constraint dependency, because it represents possible constraints within the variability model. The selection of a variation point VP/variant V can influence the selection of another variation point VP/variant V. The constraint dependency as used in the variability meta-models VMM are "requires" and "excludes". Accordingly, a constraint dependency either indicates that a selection of variation point VP or variant V assumes the selection of another variation point VP or variant V ("requires") or indicates a selection of a variation point VP or a variant V prohibits the selection of another variation point VP or variant V ("excludes"). With other words the constraint dependency "requires" describes that a variant V needs another variant V or variation point VP for its realisation or that a variation point VP needs another variation point VP for its realisation. Furthermore, the constraint dependency "excludes" describes that it is not allowed to use a variant V with another variant V or variation point VP and it is not allowed to use any variant V of two variation points VP together.

Accordingly, "requires" VP_VP indicates that a variation point VP requires another variation point VP,
"requires" VP_V indicates that a variation point VP requires a variant V and
"requires" V_V indicates that a variant V requires another variant V.

The term "excludes" is used when the selection of a variation point/variant prohibits the selection of another variation point/variant i.e.
"excludes VP_VP" indicates that a variation point excludes another variation point,
"excludes VP_V" indicates that a variation point excludes a variant V and
"excludes V_V" indicates that a variant excludes another variant V.

Variability modelling is based on a conventional variability meta-model VMM as shown in fig. 1. A variability model which can represent a variability of a product line together with possible constraints between different variation points VP and variants V can be transformed to a variability meta-model VMM as shown in fig. 1. For example, features of a product can be variation points VP as well as variants V. Features that detail another feature can be considered as a variant V. A feature that is detailed by other features can be considered a variation point VP. Definition of variation points VP and variants V in the variability model allows the explicit definition of a product line such as the product line of a car manufacturer. This enables communication about variability between engineers, customers and other stakeholders of a product line.

After organisation of core assets of a domain in form of a product line using the variability meta-model VMM as shown in fig. 1 it is necessary to re-use them in future for each specific product. Product instantiation is the procedure of reusing core assets of a domain in the form of a product line for a specific product.

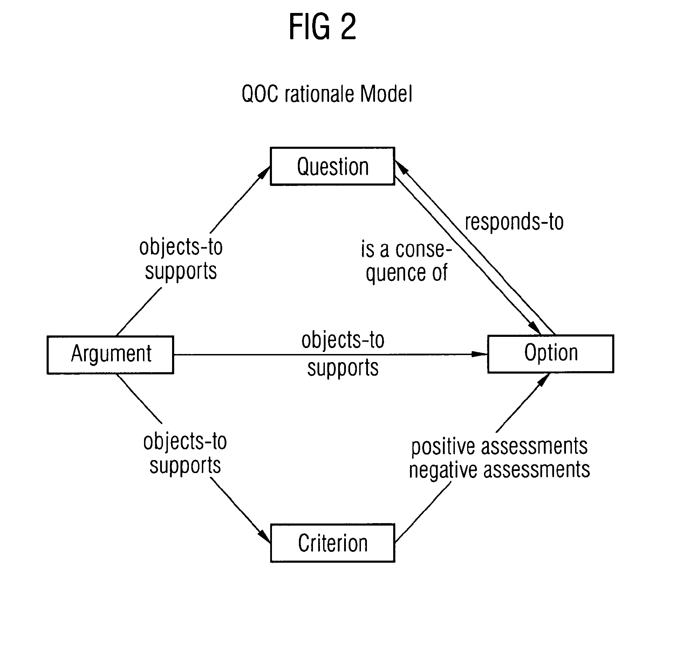

A QOC-rationale model (QOC = questions, options and criteria) captures rationale information in the form of a model. The rationale is a justification behind decisions including alternatives, evaluation of criteria, arguments and decisions. Accordingly, a QOC-model is an argumentation-based representation of rationale. Rationale is very useful for maintenance e.g. change-management, of the product lines. A QOC-rationale model using a UML class diagram is shown in fig. 2. The QOC-model as shown in fig. 2 comprises questions, options, criteria and arguments. Questions represent problems to be solved or a problem that needs clarification. Options represent considered alternatives for answering a question. Criteria represent qualities that are used to evaluate opinions in a certain context. Criteria provide positive or negative assessments for options. Non-functional requirements NFR are good contestants for such criteria. Rationale management forms are part of the knowledge management of the system.

The procedure of evaluating or selecting an option using argument and criteria in order to solve a question is called justification. In the justification procedure questions, options, criteria and arguments are elicited using the collaborative work of different stakeholders. For each question corresponding options, criteria and arguments are represented in the form of a justification matrix JM as shown in example tab. 1.

**Table 1**

| Critera | Criterion 1 | Criterion 2 |
|---|---|---|
| Option 1 | ++ | + |
| Option 2 | -- | - |

Table 1 as shown above has options as row annotations and criteria as column annotations. The justification matrix JM comprises for each combination of an option and of a criterion of the QOC-rationale model instance an argument indicating a justification of the respective option to fulfil the respective criterion. In Tab. 1 the arguments are represented by using "++", "+", "-" and "--" wherein the arguments are input by the stakeholders, indicating justification of the respective option to fulfil the respective criterion.

For instance, "++" indicates a very high degree of fulfilment, "+" fulfilment, "-" non-fulfilment and "- -" a high degree of non-fulfilment.

In the QOC model, a question can have many options and some options are instantiated based on justification. This is similar to a variation point VP having many variants V, which need instantiation. Therefore, the QOC-model employed by the method according to the present invention models variability generically.

Rationale-based Variability Management in Requirements Engineering (RVMRE) is a method of variability management using QOC-model in association with the representation techniques of OVM. As a part of RVMRE variability identification can be done using the following:

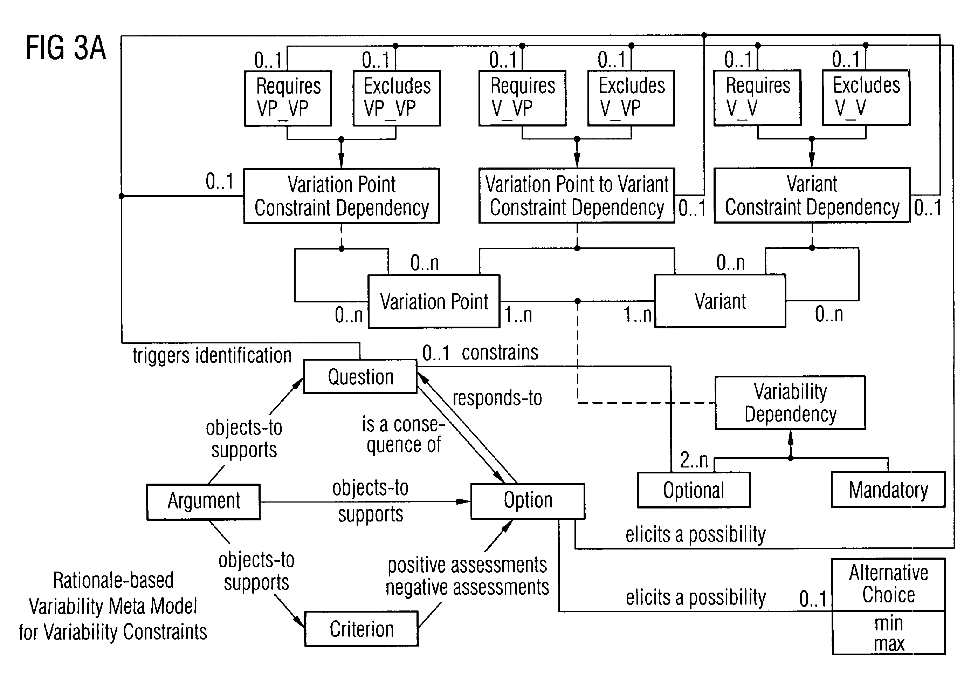

Rationale-based Variability Constraints is a method for the identification and documentation of variability constraints such as requires, excludes and alternative choice using the rationale-based variability meta model VMM for variability constraints shown in figure 3A. As a part of this method the reasoning and justification behind variability constraints are additionally captured in the form of the justification matrices JM.

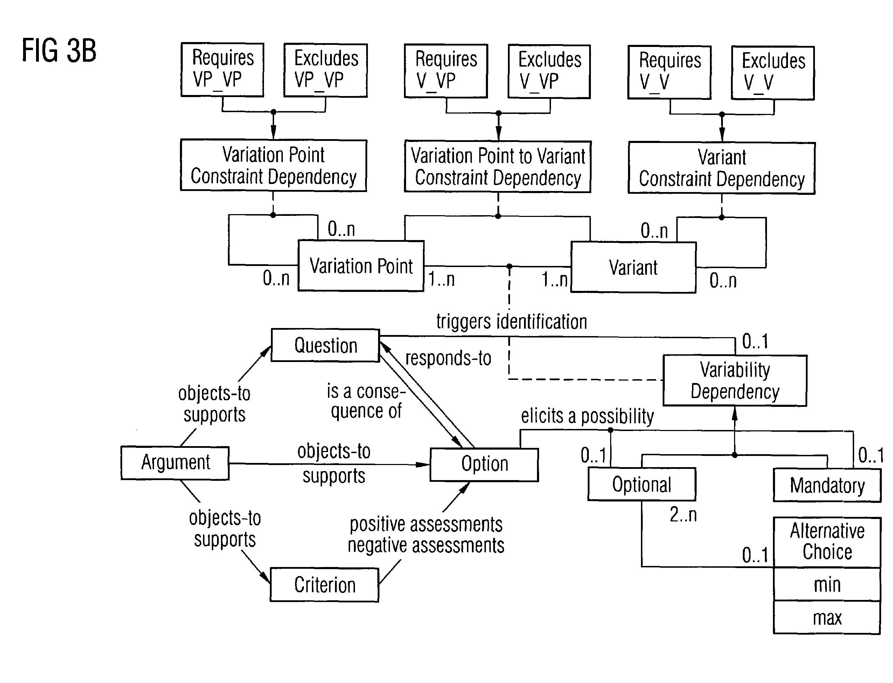

Rationale-based Variability Dependencies is a method for the identification and documentation of the variability dependencies such as mandatory and optional using the meta-model shown in figure 3B. As a part of this method the reasoning and justification behind the variability dependencies are additionally captured in the form of justification matrices JM. Rationale-based Variability Dependencies are based on the same concept as Rationale-based Variability Constraints, but they are used for different model elements such as mandatory and option.

Rationale-based Variability Dependencies and Rationale-based Variability Constraints can be together called Rationale-based Variability Identification. Rationale methods in software engineering are used to capture the decisions behind requirements, design and implementation, which can be useful for future evolution of products. In Rationale-based Variability Identification of RVMRE, rationale management are directly used for the variability management of product line requirements. Therefore using RVMRE, variability rationale is captured within the process of variability management, without any additional effort. This captured variability rationale is very useful for the evolution of variability models VM.

As per orthogonal variability modelling (OVM) in product line requirements engineering, variants V are concrete domain requirements and variation points VP are the abstractions to indicate variations V. The "core mass-customization and reuse" are managed using some dependencies such as mandatory, optional, require, excludes and alternative choice, which contributes to the structure of the variability model VM. The rationale behind the structure of the variability model VM is called "Variability Rationale". Using RVMRE one can capture variability rationale as early as variability identification and this is done by Rationale-based Variability Identification.

Fig. 3A shows a rational-based variability meta-model VMM for variability constraints as used by the method according to an embodiment of the present invention. As can be seen from fig. 3A the conventional rationale QOC model as shown in fig. 2 is integrated into the variability meta-model VMM as shown in fig. 1 to form a rationale-based meta model for variability constraints as shown in fig. 3A. The rationale-based variability meta-model for variability constraint is formed by the integration of the QOC-model in order to solve the problems associated with variability constraints.

The rationale-based variability constraint model as shown in fig. 3A allows elicitation and documentation of variability constraints. The classes as shown in fig. 3A, such as "Requires VP_VP", "Requires V_VP", "Requires V_V", "Excludes VP_VP", "Excludes VP_V", "Excludes V_V" and "Alternative Choice" are concrete variability constraints in the variability meta-model VMM as shown in fig. 1. The QOC-model and the variability meta-model VMM are linked by relationships. A question of the QOC-model is associated with "Variation Point Constraint Dependency", "Variation Point to Constraint Dependency", "Variant Constraint Dependency" and "Optional" classes of the variability meta-model VMM. By doing this a "question" is created on the classes of the variability model that are linked to variability constraints. Accordingly, the question triggers the identification of the variability constraints.

"Option" of the QOC-model is associated with variability constraints, such as "Requires VP_VP", "Requires V_VP", "Requires V_V", "Excludes VP_VP", "Excludes VP_V", "Excludes V_V" and "Aalternative Choice". Each option is associated in one embodiment to only one of the variability constraints such as a 0..1 so that multiplicity is provided. These associations can be performed because as constraint dependency classes are associated with a question the possible instances of constraint dependencies such as "Requires" and "Excludes" are options. A set of optional variants V that are associated with a variation point VP can have alternative choices. As "Optional" is associated with "Question", "Alternative Choice" is associated with "Option".

As can be seen from the meta-model shown in fig. 3A the association between "Option" and "Alternative choice" as shown in fig. 1 is deleted in fig. 3A. According to the meta-model of fig. 3A "2 to n" objects of "Optional" are associated with "o to 1" objects of "Question", and "Option" is associated with "Alternative Choice". Although, the QOC-model supports many options, in rationale-based variability constraints only one option among the supported options is justified. Accordingly, fig. 3A depicts the existing association between "Optional" and "Alternative Choice" by re-directing the association through a QOC-model and therefore the direct association between "Optional" and "Alternative Choice" is not necessary.

The meta-model as shown in fig. 3A can be operated as follows: When modelling product lines, after identifying variation points VP and variants V, variability constraints are to be identified. The identification of a variability constraint is triggered with a question of the QOC-model.

For answering a question, corresponding options are elicited from the stakeholders as shown the fig. 3A. Further, criteria and arguments are also derived from different stakeholders involved in product line modelling.

Using a justification matrix JM for each question, the justification for variability constraints is done and the correct variability constraint is identified.

As the justification matrix JM for each variability constraint is available, they are additionally documented along with the variability constraints in order to remove ambiguity behind them.

Using the meta-model as shown in fig. 3A, reasoning and justification in form of justification matrices is captured additionally with the variability constraints. This reasoning and justification behind the variability model is useful in further activities of product line engineering like product instantiation and product line evolution.

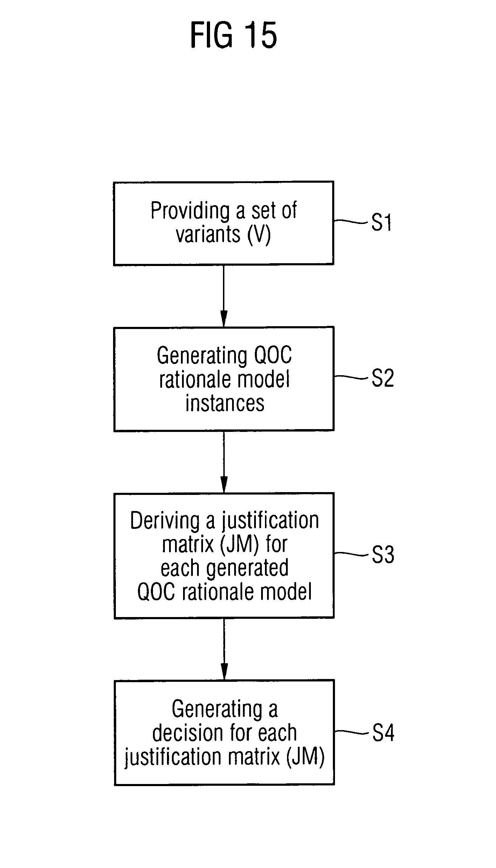

The invention provides a method for identifying an instance variability meta-model VMM which models a variability in domain requirements. In a preferred embodiment of the method according to the present invention the method comprises several sequentional steps as shown in the flowchart of Figs. 15.

In a first step S1 at least one set of variants V, each describing an object of variation and having a corresponding variation point VP indicating a variability between that variants V is provided. Each variant V is connected to at least one domain requirement.

In a further step S2 the QOC-rationale model instances related to the domain requirements are generated.

In a further step S3 a justification matrix JM is derived for each generated QOC-rationale model instance.

In a further step S4 a decision for each justification matrix JM is generated, wherein each decision comprises a variability link element VLE, which is included automatically into the variability model instance.

The variability link element VLE is formed by an alternative choice cardinality, a constraint dependency or a variability dependency. An alternative choice cardinality indicates a minimum and a maximum of selectable variants V. Constraint dependency represent possible constraints for the variability model i.e. constraint dependency indicates that a selection of a variation point VP or variant V presumes a selection of another variation point VP or variant V or indicate that a selection of a variation point VP or variant V prohibits the selection of another variation point VP or variant V.

The variability dependency is formed either by an optional variability or by a mandatory variability dependency. The QOC-rationale model instance generated in step S2 is related to the domain requirements which are connected to each variant V and comprise questions, options, criteria and arguments given by stakeholders involved in the process.

The justification matrix JM derived in step S3 describes for each combination of an option and of a criterion of the generated QOC-rationale model instance an argument input by a stakeholder indicating a justification of the respective option to fulfil the respective criterion. The justification matrix JM comprises a rationale for the variability link element VLE. The criteria of the generated QOC-rationale model instance can be formed by non-functional requirements NFR. The justification matrices JM indicates the relationship between variability i.e. variability link element VLE, and a non-functional requirement NFR.

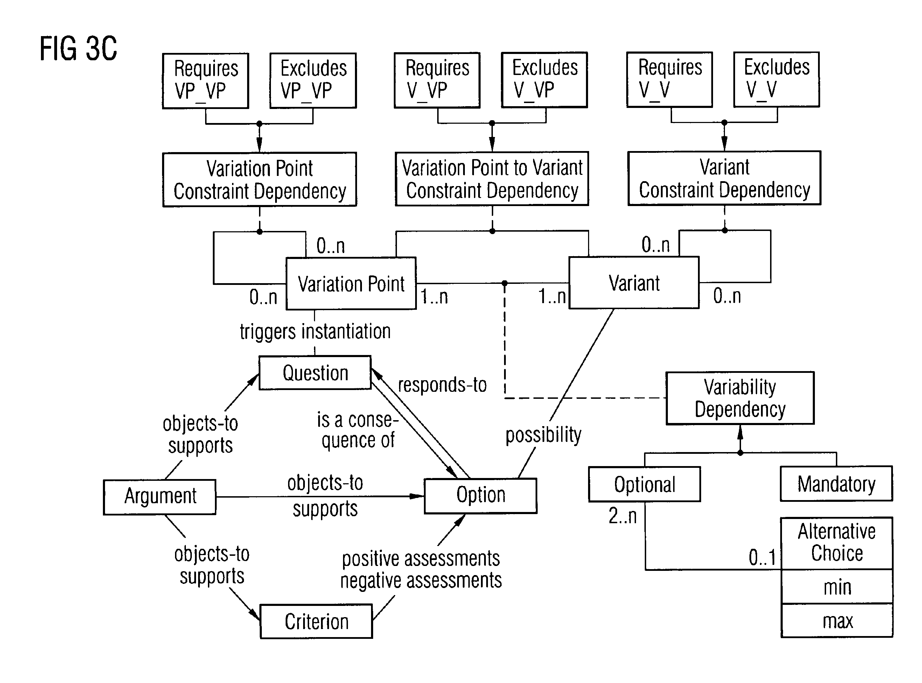

Fig. 3C shows an embodiment of a rationale-based variability meta-model for product instantiation as used by the method for performing a product instantiation according to the present invention. This is done by exploiting the generic variability of the QOC-model.

As can be seen from fig. 3C "Question" of the QOC-model is associated with "Variation Point" of the variability meta-model VMM. Accordingly, the instantiation of the variation point VP is triggered by a question. The possible optional variants that can be instantiated and which are associated to the question variation point VP for a specific application/product are QOC-options. Accordingly, in the meta-model of product instantiation "Option" class is associated with "Variant" class. The operation of the meta-model as shown in fig. 3C is performed as following. The product instantiation is conducted for example in a product line management meeting, where all stakeholders and customers together derive a specific product from a product line.

Stakeholders identify questions and possible options for a new product that is going to be instantiated. Product specific quality concerns, such as non-functional requirements NFRₛ are elicited from the customers' product lines to constitute some criteria. Some criteria of the justification matrices JM of rationale-based variability constraints are re-used and constitute the remaining criteria of rationale-based product instantiation. The arguments are derived from stakeholders and the justification is performed for the derivation of a new product. The rationale-based variability meta-model for variability constraints as shown in fig. 3C are useful for identifying and documenting the variability constraint model elements of the variability model. The rationale-based product instantiation on the basis of the rationale-based variability meta-model for product instantiation as shown in fig. 3C is performed to instantiate variants V that are associated with a variation point VP for a specific product.

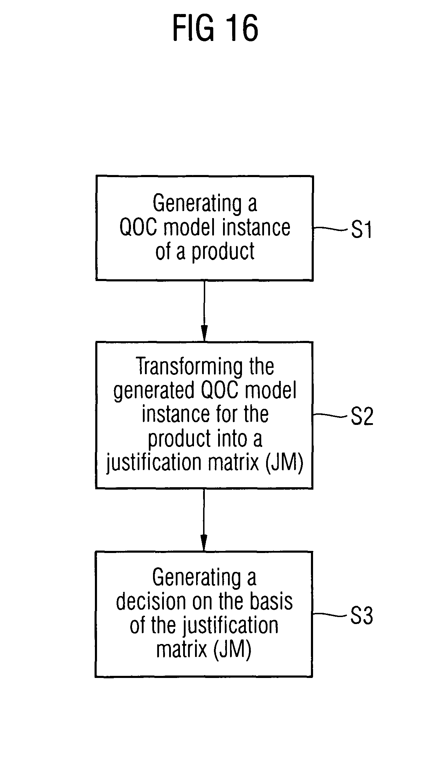

On the basis of the model shown in fig. 3C the invention provides a method for performing a product instantiation on the basis of a variability meta-model VMM instance having variants V, each describing an object of variation and variation points VP, indicating a variability between the variants V wherein the following steps are performed as shown in the flowchart of Fig. 16.

In a first step S1 a QOC-model instance of the product is generated by performing the following sub-steps.

In a first sub-step a question on an instantiation for each variation point VP of the variability meta-model VMM instance is provided.

In a further sub-step a subset of variants V of the respective variable point VP are selected depending on constraint dependencies and on variability dependencies of the variability meta-model instance.

In a further sub-step an option is automatically generated for each variant V of the selected sub-set of said variants V.

In a further sub-step criteria for the product instantiation are elicited and arguments are derived for the elicited criteria and generated options.

After having generated the QOC-model instance for the product the generated QOC-model instance for the product is transformed in a further step S2 into a corresponding justification matrix JM, which comprises for each combination of an option and of a criterion an argument indicating a justification of the respective option to fulfil the corresponding criterion.

In a further step S3 the decision for the provided question is generated from the justification matrix JM, wherein the decision comprises instantiated variants V.

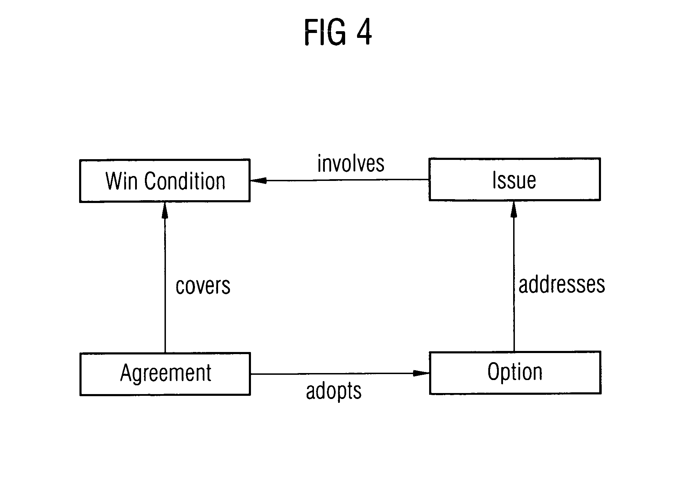

Requirements Negotiations (RN) is a practice implemented early in the planning state of a project, or phase of an incremental or evolutionary development approach in collaborative environment where there is mutual trust and respect among stakeholders. An EasyWinWin negotiation model as shown in figure 4, is a way of requirements negotiations and is explained as follows:
- A "Win Condition" constitutes an aspect that needs to be negotiated;
- "Issue" is similar to the Questions of QOC-model;
- "Option" is similar to the Option of a QOC-model;
- "Agreement" is similar to the Decision of an QOC-model.

EasyWinWin defines a set of activities guiding stakeholders through a process of gathering, elaborating, prioritizing, and negotiating requirements such as change requirements CR. EasyWinWin uses group facilitation techniques that are supported by collaborative tools (electronic brainstorming, categorizing, polling, etc.). The activities are as follows:

Review and expand negotiation topics: Stakeholders jointly refine and customize the outline of negotiation topics based on a domain taxonomy of software requirements. The shared outline helps to stimulate thinking, to organize negotiation results, and serves as a completeness checklist during negotiations.

Brainstorm stakeholders interests: Stakeholders share their goals, perspectives, views, and expectations by gathering statements about their win conditions.

Converge on Win Conditions: The team jointly craft a non-redundant list of clearly stated, unambiguous win conditions by considering all ideas contributed in the brainstorming session.

Capture a glossary of Terms: Stakeholders define and share the meaning of important keywords of the project/domain in a glossary.

Prioritize Win Conditions: The team priorities the win conditions to define and narrow down the scope of work and to gain focus.

Reveal Issues and Constraints: Stakeholders surface and understand issues by analyzing the prioritization poll.

Identify Issues, Options: Stakeholders register constraints and conflicting win conditions as Issues and propose Options to resolve these issues.

Negotiate Agreements: The captured decision rationale provides the foundation to negotiate agreements.

The EasyWinWin model as shown in figure 4, is similar to the QOC model as shown in figure 2, however, the QOC model does not do any brainstorming to elicit questions, options and criteria.

Therefore, EasyWinWin activities can be useful for the QOC model.

When handling the evolution in product line requirements engineering the enablers of oscillations that trigger changes in variability models VM are difficult to capture in the form of criteria, which can be directly related to product line requirements PLR.

As product lines PL evolve, the changes in the variability models VM need to be managed in order to cope with the effects of evolution on mass customization and reuse. The relationships in the variability models VM are in conventional systems inherently underspecified because of lack of reasoning and justification behind them. As the variability models VM rely on these underspecified relationships, it is difficult in conventional systems to perform changes in the variability models VM. Therefore, the amount of time and money spent on product line evolution PLE in the current state of art systems is very high. Therefore, implementation of a QOC model is useful in handling the evolution of variability model VM in product line requirements PLR engineering because key decisions are taken manually by the collaboration of many stakeholders in the process of product line evolution PLE. The collaborative and negotiation-based decision-making strength (using justification) of QOC model is useful for negotiating the changes in the variability models VM by resolving conflicts. Furthermore, a variability rationale makes the change management of the variability models easier.

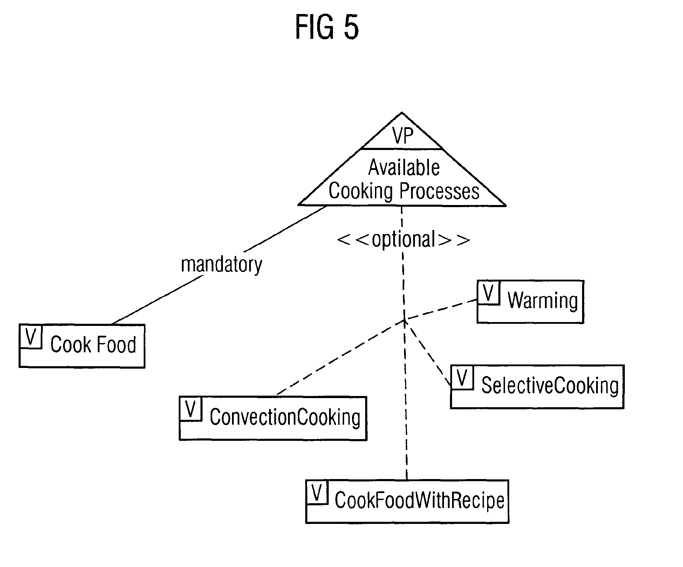

Fig. 5 shows a simple variability model using OVM notation. In the given example the product P is formed by a microwave oven in the field of domestic appliances. Different microwave ovens support different types of cooking processes. Therefore, it is possible to identify a variability in cooking processes of microwave ovens. In the simple example as shown in fig. 5 the variation point "available cooking processes" has four optional variants V like "convection cooking", "cook food with recipe", "selective cooking" and "warming". The variation point VP also has a further mandatory variant such as "cook food" which is not considered in the further discussion for sake of simplicity.

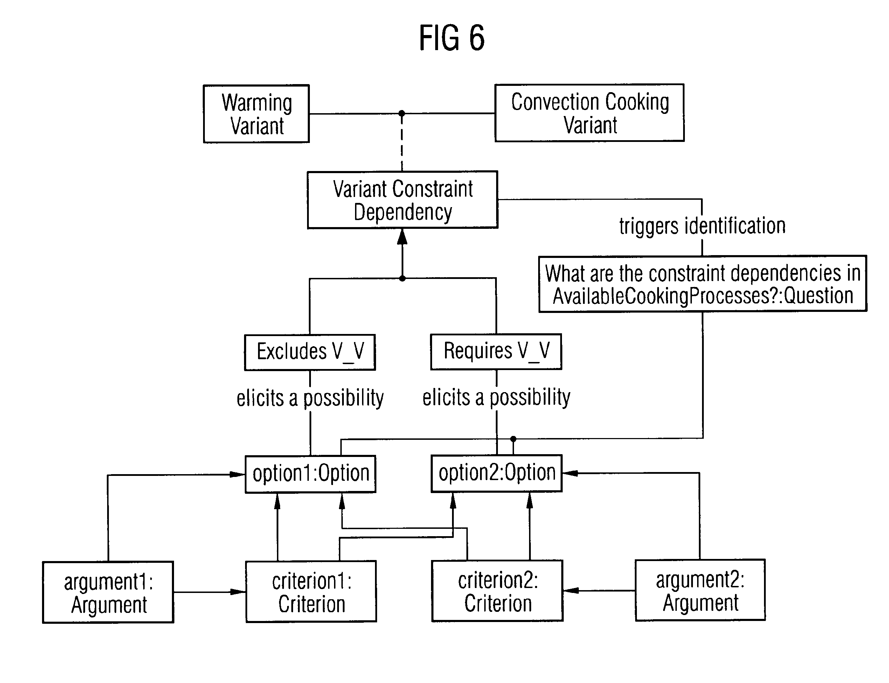

Fig. 6 shows a specific instance of the rationale-based variability meta-model VMM for variability constraints as shown in fig. 3 for the example shown in fig. 5.

A first stakeholder triggers the elicitation of constraint dependencies between variants V and starts the negotiations as shown in tab. 2.

**Table 2**

| Stakeholder 2 | |
|---|---|
| Question | What are the constraint dependencies in the variants related to the variation point "available cooking processes"? for e.g. "convection cooking" seems to have effect on other cooking processes. |

| Stakeholder 2 | |
|---|---|
| Option1 | We can choose only one of the convention cooking and warming (convection cooking excludes warming) |
| Argument 1 | Convection cooking and warming relies on different hardware technologies. Using both of them increases the cost of the microwave oven. |
| Criterion 1 | Optimal cost price for product: according to regulation GO304, the price of microwave ovens should not exceed 999USD. |

| Stakeholder 3 | |
|---|---|
| Option 2 | If one of the "Convection cooking and warming" cooking process is selected, the other should be selected. ("Convection cooking requires warming, and warming requires convection cooking") |
| Argument 2 | Convection cooking and warming are advanced features as per current technologies. So keeping them in one product increases sales. This decision is taken by requirements engineering stakeholders5 |
| Criterion 2 | Boosting sales: increase of sales by attracting many customers. |

A second stakeholder and a third stakeholder give also possible options, criteria and arguments as shown in tab. 2.

The reasoning behind option 1 is described using argument 1 and criterion 1.

In a similar manner stakeholder 3 gives option 2, argument 2 and criterion 2, which are shown in tab. 2. The generated QOC-rationale model instance as shown by tab. 2 is related to the domain requirements. From the generated QOC-rationale model instance shown in table 2 a justification matrix JM is derived as shown in tab. 3 below. The justification matrix JM as shown in tab. 3 comprises for each combination of an option and of a criterion of the generated QOC-rationale model instance an argument input by a stakeholder indicating a justification of the respective option to fulfil the respective criterion. For Example a technician as a first stakeholder gives option 1 and a businessman as another stakeholder gives option 2. The argument indicating a justification of the respective option to fulfil the respective criterion, for instance, justification of the option "convection cooking excludes warming" fulfils the criterion "optimal cost price for product" (i.e. the microwave oven) is input by another stakeholder, such as the product team leader indicating that option 1 fulfils very good the respective criterion. In contrast option 2 i.e. convection cooking requires warming and warming requires convection cooking does not fulfil the respective criterion, i.e. "optimal cost price for product". Accordingly, in possible embodiment the argument is input as a scaling factor ranging from "++" for a full fulfilment to "- -" indicating that the option does not fulfil the respective criterion at all.

**Table 3**

| Justification for constraint dependency between Convection Cooking and Warming | | |
|---|---|---|
| Critera | Optimal cost price for product | Boosting sales |
| Option 1: convection cooking excludes warming | ++ | + |
| Option 2: convection cooking requires warming & Warming requires convection cooking | -- | ++ |
| Decision: option 1 is justified, as we have a positive justification for both criteria | | |

From the derived justification matrix JM as shown in table 3 a decision is derived which comprises the variability link element VLE which is included automatically into a variability model instance. In the given example the generated decision for action item is that "option 1 is justified since there is a positive justification for both criteria, i.e. cost price for product and boosting sales.

The action item "convection cooking excludes warming" generated as a decision is automatically included into a system model of a software engineering system. Consequently, the knowledge model, i.e. QOC-model is linked to a system model, such as the variability model, and is used for an automatic update of the variability model which forms an instance of the variability meta model VMM. Furthermore, the knowledge model, i.e. the QOC-model leads to the generation of a decision using a derived justification matrix JM. Since the justification matrix and the QOC-model are generated by stakeholders and organisations, such as an engineering company, there is also a link of the knowledge model to the organisation model such as an organisation diagram indicating the stakeholders which provide the necessary input. For instance, a product line manager responsible for the instantiated product will debate each pair of option/criterion provided by other stakeholders from other departments such as technicians or sales manager to generate a decision which leads to an automatic update of a software engineering model.

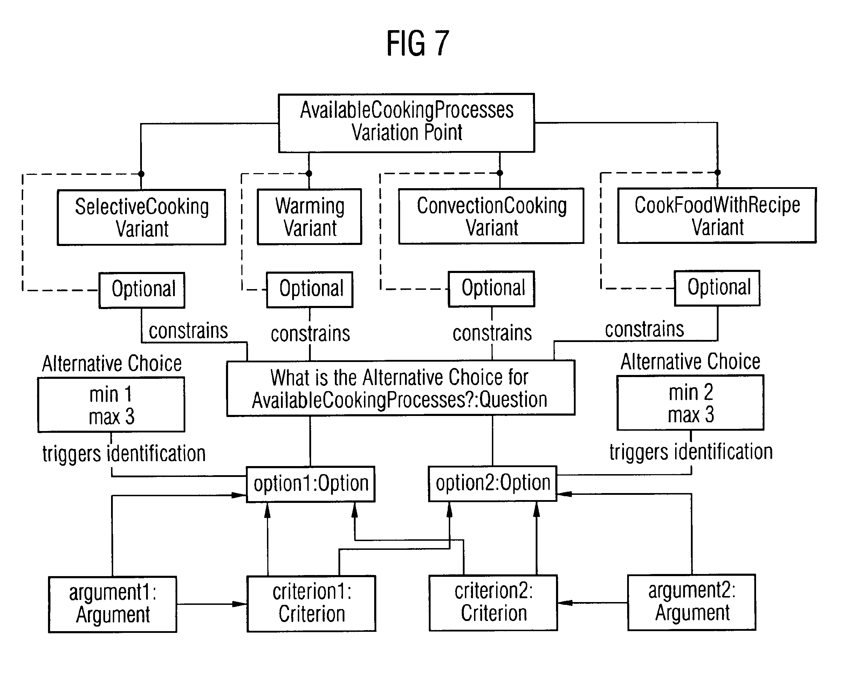

Fig. 7 shows an example of an instantiation of a rationale-based variability meta-model VMM for variability constraints for an alternative choice.

The rationale-based variability constraints can be used for the identification of an alternative choice of the "available cooking process" variation point VP. Fig. 7 shows a specific instance of a rationale-based variability meta-model for variability constraints as shown in fig. 3 for the identification of the "available cooking process" variation point VP as shown in fig. 5. Questions, options, criteria and important arguments in this example are shown as a QOC-model instance in table 4.

**Table 4**

| Stakeholder 1 | |
|---|---|
| Question | What is the alternative choice for available cooking processes variation point? |

| Stakeholder 2 | |
|---|---|
| Option 1 | 1..3 (minimum of 1 and a maximum of 3 variants can be selected from the available cooking processes variation point) |
| Argument 1 | The range of cooking processes (from 1 to 3) satisfies the quality of criterion 1. |
| Criterion 1 | Usability: a user of the microwave shall be able to learn 80% of ist functionalities within 8 to 12 hours. |

| Stakeholder 3 | |
|---|---|
| Option 2 | 2..3 (minimum of 2 and a maximum of 3 variants can be selected from the available cooking processes variation point) |
| Argument 2 | Some microwave ovens do not have enough memory for more than one cooking process. |
| Criterion 2 | Memory: the memory of a microwave oven range form 3 memory pads to 10 memory pads. |

The QOC-model instance of tab. 4 is transformed into a justification matrix JM for the alternative choice as shown in tab. 5

**Table 5**

| Justification for the alternative choice of the available cooking process variation point | | |
|---|---|---|
| Criteria | Usability | Memory |
| Option 1: 1..3 | ++ | + |
| Option 2: 2..3 | - | - |
| Decision: option 1 is justified, because of positives in both the criteria. | | |

In the given example using the shown justification matrix JM option 1 (1..3) is selected as an alternative choice of the "available cooking process" variation point VP.

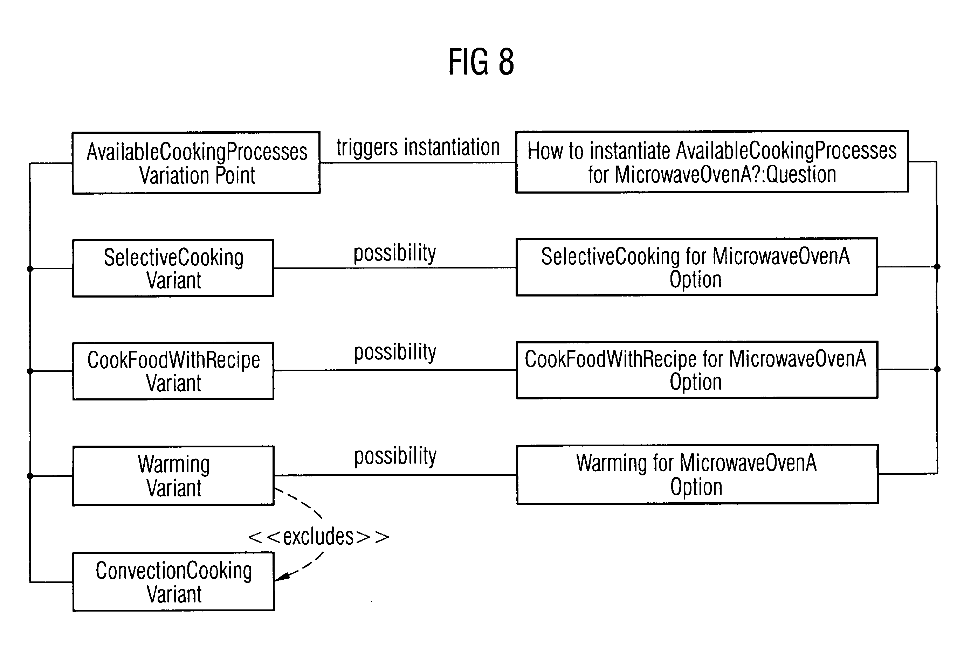

Fig. 8 shows a specific instance of a rationale-based variability meta-model for product instantiation as shown in fig. 4 for the instantiation of "available cooking process" variation point VP as shown in fig. 5. In this example optional variants of "available cooking processes" variation point VP are instantiated for a new application "microwave oven".

Tab. 6 shows the elicitation of knowledge from stakeholders for the instantiation of "available cooking processes".

**Table 6**

| | |
|---|---|
| Question | How to instantiate "available cooking processes" variation point for microwave oven A? |
| Option 1 | Selective cooking is selected for microwave oven A |
| Option 2 | Cook food with recipe is selected for microwave oven A |
| Option 3 | Warming is selected for microwave oven A |
| Criterion 1 | Response time: the cooking processes of the microwave oven shall respond within 0.1 seconds |
| Criterion 2 | Usability: a user of the microwave shall be able to learn 80% of its functionalities within 9 hours |
| Criterion 3 | Memory: the memory of the microwave oven constitutes 6 memory pads |
| Criterion 4 | Reliability: the microwave oven shall be operated within the rate of 0.008 errors/hour. |
| Argument 2 | Selective cooking objects-to microwave oven A, because it contradicts the usability requirement as described the criterion 2. |
| Argument 10 | Warming supports microwave oven A, because it needs less memory. |

Fig. 8 shows an instantiation of the variation model instance as shown in fig. 4. This instantiation can be conducted in a product line management meeting where different stakeholders like product line managers, domain requirement engineers and customers tend to derive reuse requirements using variability models based on the needs of customers for products such as microwave ovens.

The stakeholders identify critical variation points VP which need interactive decision making in order to instantiate them. In the above example "available cooking processes" is a critical variation point VP.

On a basis of a variability model the stakeholders identify a question and possible options. In the given example question and possible options are shown in the tab. 6.

In the given example non-functional requirements NFRs which are elicited from the customers such as "response time" shown in tab. 6 and which constitute product specific criteria and product line specific criteria such as "usability" and "memory" tab. 6 are re-used from tab. 5.

The arguments are derived by the collective work of the stakeholders and a justification matrix JM is generated as shown in tab. 7.

**Table 7**

| Justification: instantiation of available cooking process variation point for the microwave oven A | | | | |
|---|---|---|---|---|
| Criteria | Response time | Usability | Memory | Reliability |
| Option 1: selective cooking | - | -- | + | + |
| Option 2: cook food with recipe | + | ++ | + | + |
| Option 3: warming | + | + | ++ | + |
| Decision: | | | | |
| • cook food with recipe is selected because of better response time and usability, when compared to selective cooking | | | | |
| • warming is selected as it has plus points in all its criteria | | | | |

In the generated justification matrix "cook food with recipe" and "warming" are optional variants of "available cooking process" variation point VP that are instantiated for the microwave oven. Similar to fig. 6 and 7, in fig. 8 the objects of "option" are connected to the objects of "argument" and "criterion". In the given example there are four criteria and twelve arguments which are not shown in the instance diagram for the sake of simplicity. By using the rationale-based product instantiation method it is possible to perform interactive decision making in the context of product instantiation. In the given example using collective work of different stakeholders the method according to the present invention instantiates the "available cooking processes" variation point VP for a microwave oven product.

Each product has different quality concerns, i.e. functional requirements like response/time, usability, reliability and memory as indicated in tab. 7. Using the method according to the present invention it is possible to connect product specific non-functional requirements NFRs to an instantiated product and consequently handle the effects of non-functional requirements NFR on product instantiation.

Although product lines do not always have enough information for product instantiation it is possible with the method according to the present invention to add external knowledge using "arguments" and "criteria".

Furthermore, some rationale information from rationale-based variability constraints are reused for rationale-based product instantiation, so that the product instantiation is made much easier. In the given example, criteria such as "memory" and "usability" are reused from tab. 5.

The method and apparatus according to the present invention provides several advantages. After constructing a product line the product line may live only for a particular period. If the product line is not further prosecuted it is very difficult to change product line models due to lack of reasoning behind them. As rational methods give reasoning and justification for variability it is possible with the method according to the present invention to change product line models. Accordingly the method according to the present invention can improve a life span of a product line and thus safe money.

The variability constraints restrict a possible combination of products that can be derived from product lines. With the method according to the present invention it is possible to elicit constraints so that product instantiation becomes easier. With the method according to the present invention faulty components can be reduced. In requirement engineering most of the stakeholders have a business related education and do not have a good technical knowledge of software engineering. The method according to the present invention has the further advantage that it focuses on matrix based presentations such as a justification matrix JM. Accordingly, the usability of the method according to the present invention is high.

The variability constraints in product line requirement engineering originate from the decisions of stakeholders from different departments such as business, marketing, legal issues, standardisation, technology and NFRs. As these aspects originate from knowledge within the stakeholders a rational management as used by the method according to the present invention enhances the success of product line requirements engineering. Furthermore, the method according to the present invention improves the collaboration between different stakeholders in product line requirements engineering and provides a basis for interactive decision making.

The method and apparatus according to an embodiment of the present invention uses rationale models for product line requirements engineering. The method according to the present invention which identifies a variability link element VLE and additionally captures rationale is useful particularly for the maintenance e.g. change management, of the product line PL. The QOC-model according to the method according the present invention comprises a generic variability. The QOC-model instance, i.e. questions and criteria, which are employed by the method according to the present invention are contributed by various stakeholders which may sit in different countries or even continents and thus enable global product line requirements engineering.

The invention further provides in an embodiment a method for processing change requests to change a variability model VM of a product line PL.

Figure 16 shows a possible embodiment of the method for processing change requests CR.

In a step S1, change requests CR of different stakeholders are selected. In a possible embodiment, the change requests CR are selected according to their priority by a project manager of the product line PL. The project manager can assign a priority for each change request CR wherein the change requests CR are sorted according to their assigned priority in descending order. The change request CR with the highest priorities are selected by the project manager.

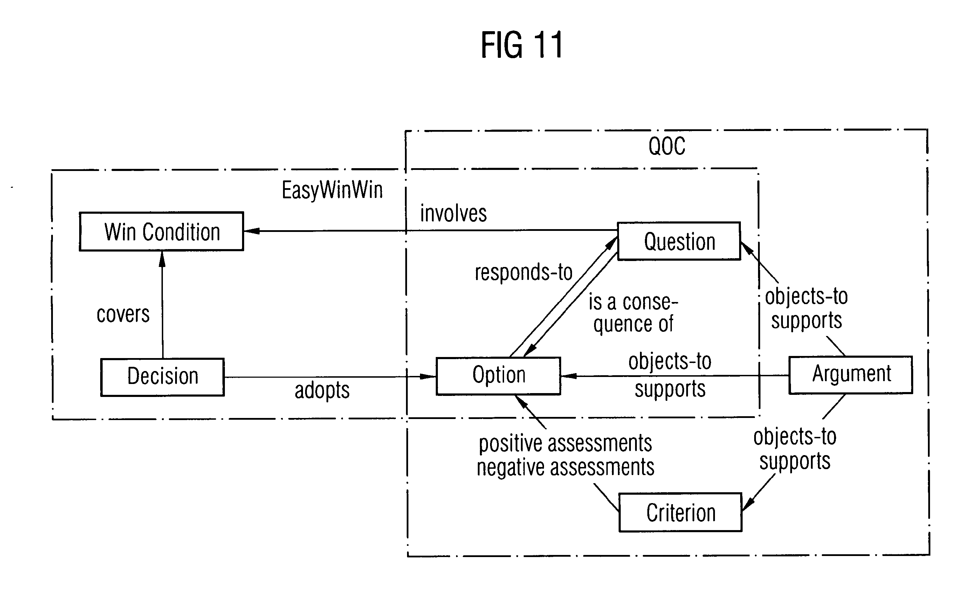

In a further step S2, evolution criteria EC for evolution of the variability model VM are derived during using a negotiation model. The negotiation model is formed in a preferred embodiment by a questions, options and criteria (QOC) EasyWinWin model as shown in figure 11.

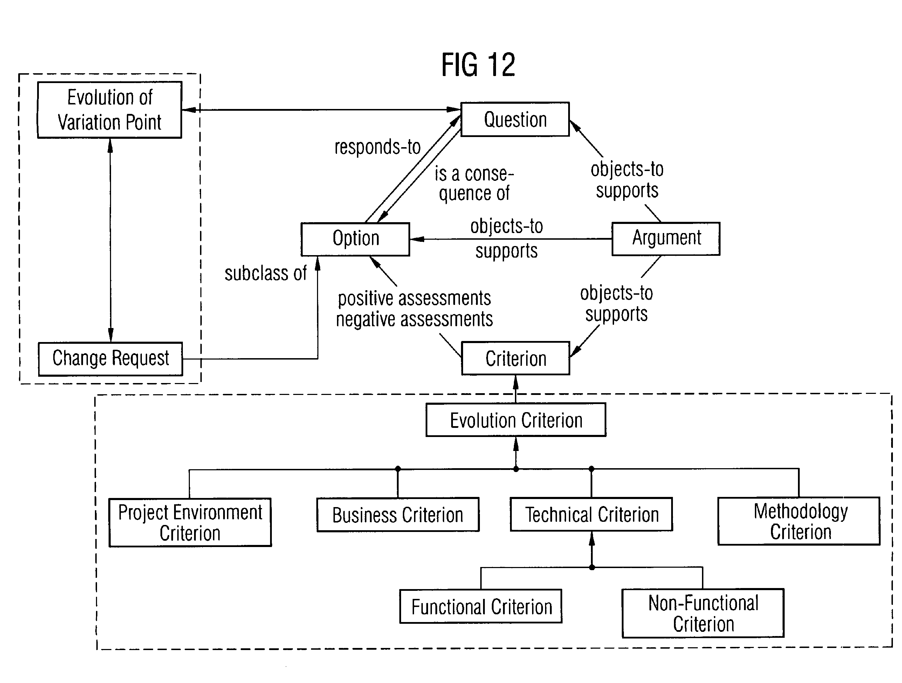

In a further step, a justification matrix JM is generated. The stakeholders input arguments into a justification matrix template comprising data fields for all selected change requests CR and all evolution criteria EC derived by means of the negotiation model. Figure 12 shows an example for a justification matrix JM for the evolution of a variability model VM.

In a further step S4, the formed justification matrix JM is evaluated to derive a decision whether to accept one or more of the change requests CR.

On the basis of the derived decision, the variability model VM of the product line PL is updated.

In a possible embodiment, the update of the variability model VM is performed automatically on the basis of the derived decision.

In a possible embodiment, the method according to the present invention is performed on a distributed computer system wherein the different stakeholders are connected to each other over a computer network.

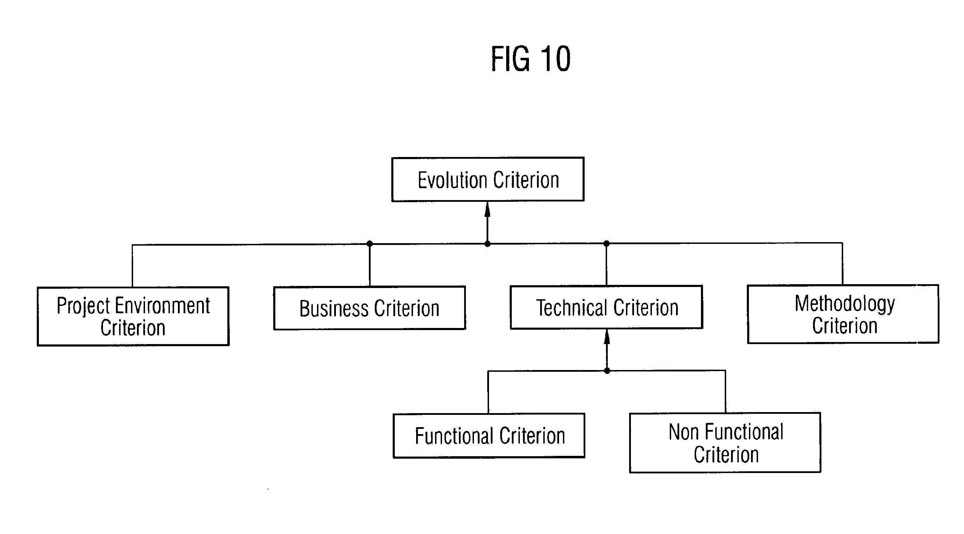

The method and apparatus according to the present invention provides a procedure "Rationale-based Product Line Evolution" to solve the problems associated in handling the evolution in product line requirements PLR engineering. The rationale-based Product Line Evolution PLE as performed by the method according to the present invention uses a negotiation-driven approach and employs the QOC model as the solution methodology. The rationale-based Product Line Evolution according to the invention uses:
- a taxonomy of evolution criteria EC as shown in figure 10;
- a QOC-EasyWinWin model which is a combination of the QOC model as shown in figure 2 and the EasyWinWin model as shown in figure 4.
- a methodology to justify change requests CR using the QOC model as shown in figure 12;

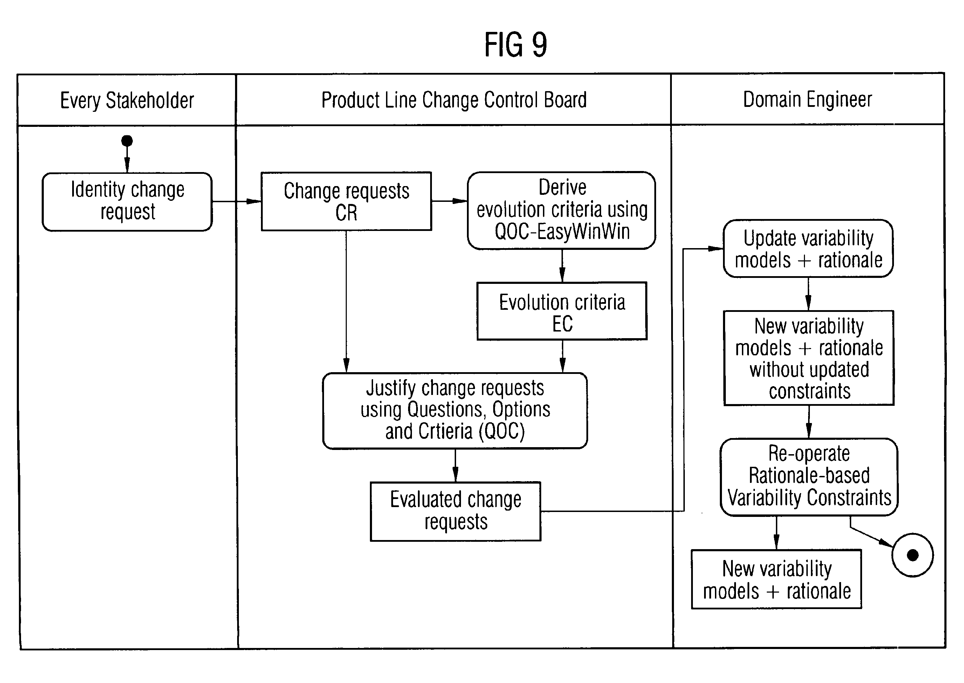

The procedure for the Rationale-based Product Line Evolution PLE according to an embodiment of the present invention is depicted as an activity diagram in figure 9. The concepts behind the activities are explained as follows:
- Identify change requests: The change requests CR of the' variability models VM are identified in this activity. This activity outputs for the data nodes Change requests CR. Every stakeholder can pose a change request CR;
- Derive evolution criteria: Evolution criteria EC can be defined as the abstracted entities that reflect the enablers of the evolutions, which can quality and direct the evolution of the variability models VM without conflicts at that point of time. Some evolution criteria EC can be derived by reusing the criteria of the existing variability rationale. The derivation of evolution criteria EC is done in an embodiment by using the modifications of the EasyWinWin model;
- Justify changes using Questions Options und Criteria (QOC): Taking the Change requests CR and Evolution criteria EC as inputs, the changes of the variability models VM are justified using the QOC model. This activity outputs the concrete changes in the variation points VP (Evaluated change requests) by negotiating some change requests CR to decisions. The members of the Product Line Change Control Board collaborate in this activity and negotiate the change requests CR to agreements;
- Update variability models + rationale: The accepted changes are performed and the variability models VM including the rationale behind them are updated to give updated variability models VM and rationale without updated constraints.
- Re-operate Rationale-based Variability Constraints: Taking updated variability models VM plus rationale without updated constraints as input, wherein by reusing the existing rationale the variability constraints are updated using the methodology of Rationale-based Variability Constraints to give updated variability models VM and rationale.

The reuse of rationale is defined as the process of reusing partly or fully the information present in the justification matrices JM of old variability rationale to build the justification matrices JM for the updated rationale. The reuse of the existing variability (captured as a part of Rationale-based Variability Identification) rationale is an aspect of the procedure, and is realized in the activities "Derive evolution criteria using QOC-EasyWinWin" and "Re-operate Rationale-based Variability Constraints". Please note that figure 9 reuses existing variability rationale and gives updated variability models + rationale as output. Accordingly, the Rationale-based Product Line Evolution PLE according to an embodiment of the present invention is a self sustained activity, i. e. current changes generate rationale for future use.

In medium and large product line organizations, the product line organizations are separate and their clients are the product units. As the number of parallel product teams are growing numerically, and due to the globalization of product lines PL there is a need for collaborative change management mechanism. The rationale-based Product Line evolution PLE according to an embodiment of the present invention can solve this problem.

Different stakeholders have different areas of expertise. So the classification of evolution criteria EC is important. A preferred taxonomy of evolution criteria EC is shown in figure 10.

"Functional Criterion" is a technical innovation in terms of functionality, or a functional basis, which can direct product line evolution PLE.

"Non Functional Criterion" expresses the Non-functional Requirements (NFRs) such as usability, portability, memory, security, reliability or response time that can direct product line evolution PLE.

"Business Criterion" expresses the factors such as sales or price that originate from business as well as marketing decisions for directing the evolution of a product line PL.

"Project Environment Criterion" expresses the factors such as project duration, client type, client acceptance or geographical distribution of a project that can affect product line evolution PLE. A product line team PLT can be separated (technically, geographically and organizationally) from product teams PT, and many product teams PT can concurrently work with the product line team PLT. Therefore changing assets in a product line PL has a significant impact on product teams PT, too. It does not have much impact on other parts of RVMRE such as Rationale-based Variability Identification and Rationale-based Product Instantiation.

"Methodology Criterion" such as APIs, CAD tools, or software engineering methodologies can also influence product line evolution PLE, but only indirectly. Methodologies which simplify the project work can help to achieve project deadlines within time and can provide enough time to work on product line evolution PLE thus having an effect a product line PL releases. Usability (a non functional criterion) and money related aspects like return on investment and price (business criterion) are contestants for the evolution criteria EC. In most applications these evolution criteria EC have a significant impact on the product line evolution PLE. As per Rationale-based Product Line Evolution, the product lines evolve due to the oscillations/changes in the evolution criteria EC. Therefore, handling changes through the evolution criteria EC is realistic, and therefore implemented by the method according to the present invention.

An Easy Win Win negotiation model, involves the identification of win conditions, issues within win conditions, investigation of options for these issues and negotiation of an agreement for an issued win condition. A QOC model supports options to solve a question (issue of Easy Win Win) and provides the reasoning-based justification of an option thus negotiating an option to a decision (agreement of Easy Win Win) using a justification matrix JM.

As there are many similarities between the EasyWinWin model and QOC model, the QOC shown in figure 2 is integrated into EasyWinWin of figure 4 to obtain a QOC-EasyWin4Vin as shown in Figure 1. This integration is done using the following modifications:
- as "QOC Question" is same as EasyWinWin "Issue", Question is used as the Issue of EasyWinWin;
- EasyWinWin and QOC shares the same "Option";
- the Agreement of EasyWinWin is renamed as Decision.

QOC-Easy Win Win is an enhancement of Easy Win Win with Argument and Criteria, and is operated as per the activities of Easy Win Win negotiation model. QOC-EasyWinWin systematizes the communication between different stakeholders on the basis of the QOC model, helps stakeholders with the identification of questions, options and criteria. Its methodology can be used for deriving evolution criteria EC by resolving conflicts between them. QOC-EasyWinWin reuses the existing variability rationale in deriving the evolution criteria EC.

The QOC-EasyWinWin methodology is an efficient way of operating the QOC model, and provides methodologies for the identification of Questions, Options and Criteria in requirements engineering. Therefore it can also be used in other aspects of RVMRE like Rationale-based Variability Identification and Rationale-based Product Instantiation.

Normally while performing the changes in requirements engineering, stakeholders do know possible changes in requirements but do not know the consequences of those changes (because of the conflicts). One way of reducing the negative effects of changes is to perform justification for changes in requirements. The QOC model can be used to negotiate the changes in the variability models VM by providing collaboration between different stakeholders. The conceptual model for justification of the changes is shown in figure 12. Variability dependencies such as mandatory and optional are used to model the core variations within the requirements. A focus is to handle the changes in these variability dependencies that are caused due to evolution criteria EC. The concepts behind questions, options and evolution criteria EC of the conceptual model are explained below:
"Question" triggers the evolution of variability models VM or can be issued that triggers the changes in the variability models VM. Therefore, "Question" is associated with "Evolution of Variation Point".
"Option" is the possible alternative for answering a question. In the conceptual model, "Option" is a super class of "Change request" CR. Therefore, options are the possible changes that are caused by a question. Some important options (possible changes) that are involved in the evolution of the variability models VM are:
   Turn a mandatory dependency into an optional dependency Turn an optional dependency into a mandatory dependency Request a new variant V/variation point VP in the variability model VM
      Decide whether the new variant V is mandatory or optional Request to delete an obsolete variant V/variation point VP
"Criterion" is modelled as a super class of Evolution Criterion EC. A preferred taxonomy of the evolution criteria EC is shown in figure 10.

The change requests CR and evolution criteria EC of figure 9 form a collection of objects of the classes "Change Requests" and "Evolution Criterion" correspondingly. Thus the data inputs of this activity are managed. In some simple cases (low priority change requests), the criteria of the variability dependencies is mostly same as the evolution criteria EC. Therefore in these case Rationale-based Variability Dependencies can be directly re-operated to update the variability dependencies.

As a part of RVMRE, the method according to the present invention provides various ways of using the QOC model for variability management. In figure 12 an option can be a change of dependency or requirement (whereas in other cases Option takes a dependency or requirement) and it can be used to perform justification on any changes in requirements engineering.

After deciding the core changes of the variability models VM the constraint dependencies and the alternative choice of the variability models are to be updated. Rationale-based Variability Constraints can be re-operated by reusing the variability rationale behind the existing variability constraints.

In the following, an exemplary example of rationale-based variability management in Requirements Engineering is given. Microwave ovens are products in the area of domestic appliances.

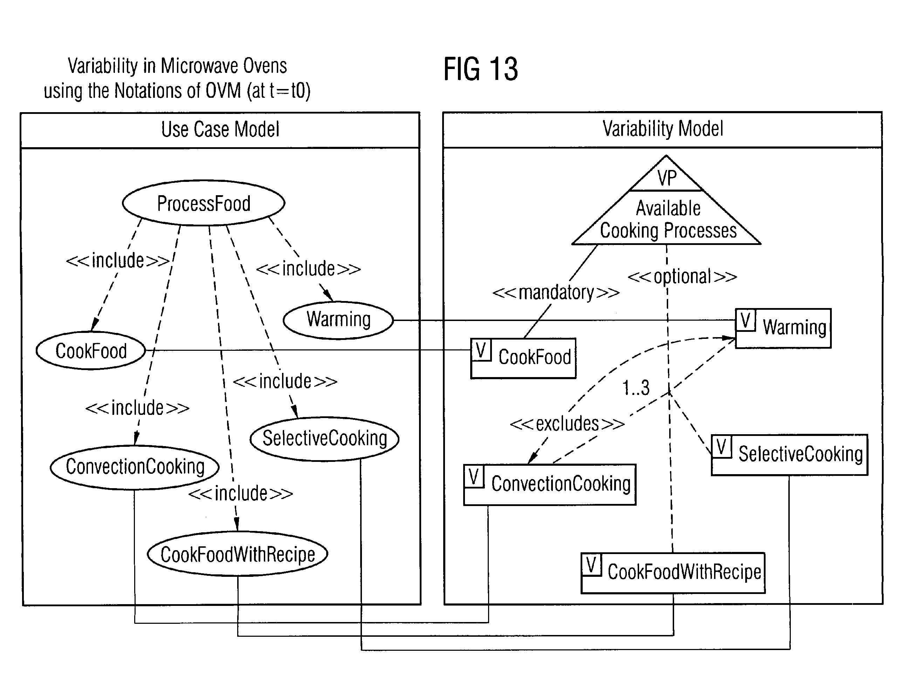

Different microwave ovens support different types of cooking processes. Therefore one can typically find variability in cooking processes of microwave ovens. The variability in the functional requirements of the cooking processes of the domain of microwave ovens at time t=t0 is represented in figure 13. In the Use Case Model, "ProcessFood" is decomposed into use cases "CookFood", "ConvectionCooking", "CookFoodWithRecipe", "SelectiveCooking" and "Warming". This functional decomposition of "ProcessFood" use case is different for different microwave ovens: "Available Cooking Processes" variation point VP has a mandatory variant "CookFood", and the optional variants V "ConvectionCooking", "CookFoodWithRecipe", "SelectiveCooking" and "Warming" as shown in the variability model VM of figure 13. The constraint dependencies and alternative choice are represented in this variability model VM. In an exemplary case (at t=t1) three new variants "Defrost", "SensorCooking" and "Grilling" are provided in the variability model VM due to the product line evolution PLE. Due to these three new variants V the variability model VM is subjected to changes and the evolution of this variability model VM is to be handled. ChildLockout "The microwave oven shall be provided with an electronic child lockout using a keypad mechanism" is an optional functional requirement (at t=t0) of the microwave oven (not part of figure 13). Relevant changes in this variability model VM are performed using the procedure of Rationale-based Product Line Evolution.

Before making decisions on a release, the change requests CR proposed by various stakeholders are collected in the given example as:
CR1: Make "Defrost" a mandatory variant
CR2: Make "Defrost" an optional variant
CR3: Make "SensorCooking" a mandatory variant
CR4: Make "SensorCooking" an optional variant
CR5: Make "Grilling" a mandatory variant
CR6: Make "Grilling" an optional variant
CR7: Turn "SelectiveCooking" into obsolete variant

In the following, a derivation of evolution criteria EC for "AvailableCookingProcesses" is illustrated using the methodology of QOC-EasyWinWin as shown in figure 11.

The relevant acitivies are illustrated as follows:
"Review and expand negotiation topics": In the context of the running example the negotiation topic is "The identification of the evolution criteria for the Available Cooking Processes".
"Brainstorm stakeholder interests": Considering the possible changes in the variability models VM reusing the variability rationale behind them, stakeholders brainstorm their interests for the identification of evolution criteria EC.

Stakeholders make an initial proposal for evolution criteria EC on the basis of figure 10, which are presented in following table 8.

**Table 8**

| Criterion | Effect on Evolution | Taxonomy |
|---|---|---|
| Automatic food identification: The microwave ovens shall be provided with a mechanism of identifying food automatically | Currently, technical innovations in the microwave ovens are going in the direction of food recognition using sensor technology in order to improve the usability of the customers. Therefore, automatic food identification affects evolution of AvailableCookingProcesses. | Functional Criterion |
| Price: The cost price of the microwave oven should be within 600 USD | For the product to be sold successfully, the cost price is one of the major criteria and different customers have different cost prices. The changes should not affect the cost price estimate and therefore it is an evolution criterion. | Business Criteria |
| Portability: The volume of the microwave oven shall be within the range of 0.9 to 1.6 cubic feet. | Providing new functionalities or increasing the existing functionalities of the microwave ovens effects of the size of the microwave ovens thus affecting the evolution of AvailableCookingProcesses. | Non-functional Criterion |
| Usability: The user of the microwave shall be able to learn 80% of its functionalities within 8 to 12 hours. (Reused from the criteria of Rationale-based Variability Identification) | The microwave ovens are aimed to provide very good usability in order to achieve a good market. Some cooking processes (variants) are targeted for some specific case of users. So change of cooking processes affected by usability and thus it is an evolution criterion. | Non-functional Criterion |
| Memory: The memory of a microwave oven ranges from 3 to 10 memory pads. (Reused from the criteria of Rationale-based Variability Identification) | The memory of the microwave ovens is within a fixed range. Therefore, performing changes in the variability model of figure 9 is dependent on the memory. | Non-functional Criterion |
| Prodct team latency: The product teams need at least 20 days to decide on the changes. | Normally, product teams are separated from the product line team. As some changes of the product line must be accepted by product teams, it takes some time for the product teams to decide on the changes suggested by product line team. | Project Environment Criterion |
| Changes per release: The number of changes per release of the Available Cooking Processes is limited to 2. | In every release of product line evolution, the number of changes is limited. | Project Environment Criterion |

In the table 8, the evolution criteria EC such as Usability, Memory, Portability and Memory are reused from the existing variability rationale shown in table 9.

**Table 9: Justification Matrix for the variability dependency of SelectiveCooking (captured at t=t0)**

| Justification: Form the variability dependency of SelectiveCooking | | | | |
|---|---|---|---|---|
| Criteria | Price | Portability | Usability | Memory |
| Option1: Mandatory | -- | + | + | ++ |
| Option2: Optional | ++ | + | + | 0 |
| Decision: Though Memory supports mandatory, it is justified to be optional because of price. | | | | |

"Converge on Win Conditions": In this activity, based on the outcome of brainstorming stakeholders interests, stakeholders try to concretely document the win conditions (proposed evolution criteria) without redundancies for the product line evolution PLE. In the example, focusing only on one variation point VP there are no redundancies, the evolution criteria EC derived in the previous activity are win conditions. "Prioritize Win Conditions": The win conditions are prioritized to find conflicts between them. In our example "automaticfood identification" and "changes per release" are win conditions of high priority (because of their conflicts with other evolution criteria EC) and the other win conditions are of low priority. "Reveal Issues and Constraints": Stakeholders try to identify the issues that are involved within the win conditions. In this context issues are the conflicts between the proposed evolution criteria EC. In our example the conflicts in the evolution criteria EC are:
- Conflictl: "Automatic food identification" conflicts with the other evolution criteria EC "Memory", "Portability" and "Cost Price". This is because automation software occupies lot of memory (microwave ovens have limited memory), increases the cost price of microwave ovens and affects portability due of additional hardware components.
- Conflict2: "Changes per release" conflicts with "Usability" (if one has too many new functionalities, it is difficult for the User to use them) and "Cost Price" (if one makes many changes in one release the price of the product increases).

Now the qualities of "automatic food identification" and "changes per release" are tuned in order to achieve a tradeoff with the conflicted evolution criteria EC.

"Identify Questions and Options": For each of the conflicts, questions and options are elicited from the stakeholders. In our example question and options for conflict1 are:
- "Question": To what extent is food recognition supported in automatic food identification to negotiate conflict1
- Option1: Support only basic food identification (like frozen vegetables, fresh vegetables, canned vegetables, rice and pasta)
- Option2: Support basic food identification as well as food weighing.

The question and options for conflict2 are:
- "Question": How many changes are allowed in one release of Available Cooking Processes in order to negotiate conflict2
- Option1: two changes per release
- Option2: three changes per release
- Option3: four changes per release

"Negotiate Agreements": The win conditions without conflicts are directly agreed. Therefore, "Usability", "Cost Price", "Memory" and "Portability" are agreed directly.

The win conditions with conflicts are negotiated to agreements using the justification matrices JM. Optionl is negotiated as acceptance using the justification matrix JM as shown in table 10 and Option2 is negotiated as agreement as per the justification matrix JM shown in table 11. The criteria of the justification matrices JM are the conflicted evolution criteria EC of Conflictl and Conflict2.

**Table 10: Justification Matrix for the Negotiation of Evolution Criteria (at t=t1>t0)**

| Justification: Justification for resolving the conflict1 | | | |
|---|---|---|---|
| Criteria | Memory | Portability | Cost Price |
| Option1: Support only basic food identification | ++ | + | + |
| Option2: Support basic food identification as well as food weighting | - | 0 | -- |
| Decision: Option1 is negotiated to agreement because of the positives in Cost Price and Memory | | | |

**Table 11: Justification Matrix for the Negotiation of Evolution Criteria (at t=t1>t0)**

| Justification: Justification for resolving the conflict2 | | |
|---|---|---|
| Criteria | Usability | Cost Price |
| Option1: 2 changes per relase | + | + |
| Option2: 3 changes per release | ++ | ++ |
| Option3: 4 changes per releases | -- | -- |
| Decision: Option2 is negotiated to agreement because of the very good usability and price | | |

After identifying the evolution criteria EC, the proposed changes in the variability model VM of figure 13 due to the affect of three new variants V are to be justified. Stakeholders pose a question:
- "Question": What are the changes in the Available Cooking Process variation point VP for the three new variants V "Defrost", "SensorCooking" and "Grilling"?

The possible changes due to the effect of the new variants V are the elicited from the stakeholders and they constitute options of the conceptual model:
- Option1: Make "Defrost" a mandatory variant (CR1)
- Option2: Make "Defrost" an optional variant (CR2)
- Option3: Make "SensorCooking" a mandatory variant (CR3)
- Option4: Make "SensorCooking" an optional variant (CR4)
- Option5: Make "Grilling" a mandatory variant (CR5)
- Option6: Make "Grilling" an optional variant (CR6)
- Option7: Turn "SelectiveCooking" into obsolete variant (CR7)

**Table 12: Justification Matrix for the Evolution of Variability Model (at t=t1>t0)**

| Justification: For the changes of the Available Cooking Processes variation point | | | | | | | |
|---|---|---|---|---|---|---|---|
| Evolution Criteria EC | Product team latency | Changes per release | Price | Portability | Usability | Memory | Food Identification Function |
| Option1: Make Defrost a mandatory variant | 0 | 0 | ++ | ++ | ++ | ++ | ++ |
| Option2: Make Defrost an optional variant | 0 | 0 | -- | -- | -- | -- | 0 |
| Option3: Make SensorCooking a mandatory variant | 0 | 0 | - | + | ++ | - | ++ |
| Option4: Make | 0 | 0 | ++ | + | ++ | + | 0 |
| SensorCooking an optional variant | | | | | | | |
| Option5: Make Grilling a mandatory variant | 0 | 0 | - | - | + | - | ++ |
| Option6: Make Grilling an optional variant | 0 | 0 | -- | -- | 0 | -- | 0 |
| Option7: Turn Selective Cooking into an obsolete variant | -- | - | 0 | 0 | ++ | 0 | ++ |
| Decisions: | | | | | | | |
| - "Defrost" is evaluated to be a mandatory variant. | | | | | | | |
| - "SensorCooking" and "Grilling" are evaluated to be optional. | | | | | | | |
| - "SelectiveCooking" is not an obsolete variant for this release due to the affect of "product team latency" as well as "changes per release". For the next release it is a good candidate to be deleted from the product line PL | | | | | | | |

The derived evolution criteria EC constitute the criteria and justification is performed as shown in table 12. Using this justification matrix JM "Defrost" is evaluated to be mandatory and "SensorCooking" and "Grilling" are decided to be optional variants V. One can get some forecast for the future releases from the justification matrices JM, for example "SelectiveCooking" can be deleted from the product line PL in the next release (a decision is shown in table 12). Therefore, using a negotiation-based collaborative decision-making of the stakeholders, the changes in the variability model VM can be justified without any conflicts.

### Minor changes (low priority changes)

In simple cases, Rationale-based Variability Dependencies can be directly performed for the change of the variability dependencies (mandatory to optional and optional to mandatory). Handling the change request CR for "ChildLockout" at time t=t1 is illustrated here. At the time t0<t1, "ChildLockout" is justified as an optional requirement as shown in table 13.

At a later time tl, it is re-evaluated whether, "ChildLockout" is still an optional variant. One can completely reuse the justification matrix JM of table 13 to build an updated justification matrix JM as shown in table 14. In table 14 an updated non-functional requirement Security is provided: "The microwave oven usage shall be restricted for children". By transitioning from table 13 to table 14, one can observe that the change in the state of rationale especially in the columns of "Memory" and "Price", and the new Security drives the change of optional dependency to mandatory dependency.

**Table 14: Justification Matrix for Rationale2 (at t=t1>0)**

| Justification: For the variability dependency of ChildLockout | | | |
|---|---|---|---|
| Criteria | Usability | Memory | Price |
| Option1: ChildLockout is Mandatory | 0 | -- | -- |
| Option2: ChildLockout Optional | + | + | ++ |
| Decision: ChildLockout is justified to be optional, because of the effects of the criteria Memory and Cost Price. | | | |

The changes in the variability models VM are triggered by the changes in the justification matrices JM. Therefore, having justification matrices JM behind variability can make change management easier.

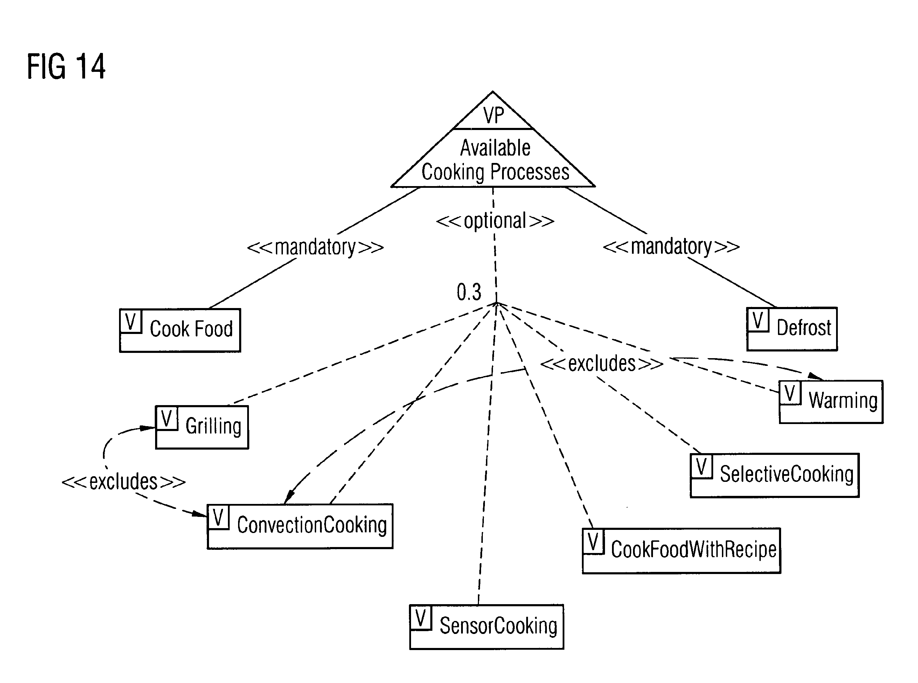

After having the change requests CR justified, the variability models VM of figure 3 are updated and the updated variability model is shown in figure 14.

For the update of variability constraints, the methodology of Rationale-based Variability Constraints uses the rationale behind the existing (old) variability constraints. At first, the constraint dependencies, later the alternative choices are updated.

An update of Constraint Dependencies is performed by using the collaborative work of the stakeholders, question and options of the conceptual model for the Rationale-based Variability Constraints. For the given example question and options are:
- Question: What are the constraints in the Available Cooking Processes Variation Point VP after adding optional variants V "SensorCooking" and "Grilling"?
- Option1: "ConvectionCooking" excludes "Grilling"
- Option2: "ConvectionCooking requires "Grilling"
- Option3: SelectiveCooking excludes SensorCooking
- Option4: SelectiveCooking requires SensorCooking

The criteria "Optimal cost price for products" and "Boosting sales" are reused (from the existing rationale behind constraint dependencies of "Available Cooking Processes") and a criterion "Usability" is newly identified. Using the available options and identified criteria, justification is done as shown in table 15.

From this justification matrix JM Optionl and option3 are justified.

**Table 15: Justification Matrix for Constraint Dependencies (at t=t₁>t₀)**

| Justification: Justification needed for the update of constraint dependencies between ConvectionCooking and Grilling, and SelectiveCooking and SensorCooking | | | |
|---|---|---|---|
| Criteria | Optimal cost price for products | Boosting sales | Usability |
| Option1: ConvectionCooking excludes | ++ | 0 | ++ |
| Option2: ConvectionCooking requires Grilling | -- | + | -- |
| Option3: SelectiveCooking excludes SensorCooking | ++ | 0 | ++ |
| Option4: SelectiveCooking requires SensorCooking | -- | + | -- |
| Decisions: | | | |
| - "ConvectionCooking" excludes "Grilling" because of optimal cost and better usability | | | |
| - "SelectiveCooking" excludes "SensorCooking" because of optimal cost and better usability | | | |

An update of alternative choice is performed by using the collaborative work of the stakeholders, question and options of the conceptual model for the Rationale-based Variability Constraints. For the current example question and options are:
- Question: What is the new alternative choice for "Available Cooking Processes" Variation Point VP after adding optional variants V "SensorCooking" and "Grilling"?
- Option1: 0..2 (minimum 2 variants V and a maximum of 3 variants can be selected)
- Option2: 0..2 (minimum 2 variants und a maximum of 3 variants can be selected)

In this case the criteria "Memory" and "Usability" are both reused from the justification matrix JM behind existing alternative choice. The new justification matrix JM is shown in table 16 and from this Option1 is justified.

**Table 16: Justification Matrix for Alternative Choice (at t=t1>t0)**

| Justification: For the update of alternative choice of the available Cooking Processes | | |
|---|---|---|
| Criteria | Memory | Usability |
| Option1: 0..2 | ++ | + |
| Option2: 0..3 | - | - |
| Decision: Option1 is justified, because of the memory problems and usability of the customers. | | |

The new alternative choice (0..3) and new constraint dependency (Grilling excludes ConvectionCooking) are depicted graphically in figure 14.

Based on the microwave oven example, one can conclude that Rationale-based Product Line Evolution can be used to handle product line evolution in requirements engineering. An existing variability rationale can be reused for identifying new variability model elements and additionally the new variability rationale. The new variability rationale is useful for managing future changes. Therefore, while making current changes rationale for managing future changes is additionally captured. Therefore, Rationale-based Product Line Evolution is a self-supportive methodology, and paves the way for the continuously evolvable product lines.

The method and apparatus according to the present invention provides several advantages. Most money and time invested on product lines PL is spent on evolution, as conventional product line approaches are based on underspecified dependencies. Using Rationale-based Product Line Evolution PLE on the top of Rationale-based Variability Identification makes the evolution of product lines PL cheaper and easier.

Product line development is distributed geographically and therefore the expertise is often distributed across the globe. The quality of the evolved requirements is only good, if key stakeholders give their commitment to product line evolution PLE. This is practically difficult because, it is not possible to bring them together for a meeting. The method according to the present invention supports global collaboration using RVMRE.

Product lines PL are investments for the future. Conventional product lines PL are dying after some time as they rely on underspecified model elements. Therefore, money is to be reinvested and product lines PL are to be re- built. The method according to the present invention allows handling evolutions continuously over time (or provides continuous evolvable product lines).

Handling evolution of product line requirements is an important issue in the product line requirements engineering, but there are not many approaches as per the current state of art.

Therefore, the method according to the present invention can be implemented by business units quickly.

The method according to the present invention can be coupled with engineering methodologies such as natural-language based approaches, UML requirements engineering models, feature modeling etc.

Rationale-based Product Line evolution PLE relies on QOC model as other approaches in RVMRE such as Rationale-based Variability Constraints, Rationale-based Variability Dependencies and Rationale-based Product Instantiation.

Rationale-based Product Line Evolution PLE is a self-supportive process i. e. performing current changes leads to the capture of the rationale for future, which paves the way for the continuously evolvable product lines.

Rationale-based Product Line Evolution PLE resolves the conflicts within the variability models VM. Therefore the quality of the change management improves when compared to the current state of art systems.

The QOC-EasyWinWin model provides a systematic methodology for negotiating decisions based on the QOC model.

## Claims

1. A method for processing a variability model of a product line (PL),
wherein a decision is derived on the basis of a predetermined negotiation model.

2. The method according to claim 1,
wherein an instance of a variability meta-model (VMM) which models a variability in domain requirements is identified on the basis of a QOC-rationale model.

3. A method for identifying an instance of a variability meta model (VMM) which models a variability in domain requirements,
wherein the method comprises the steps of:
(a) providing at least one set of variants (V) each describing an object of variation and having a corresponding variation point (VP) indicating a variability between said variants (V),
wherein each variant (V) is connected to at least one domain requirement;
(b) generating QOC-rational model instances related to said domain requirements;
(c) deriving a justification matrix (JM) for each generated QOC-rational model instance; and
(d) generating a decision for each justification matrix (JM),
wherein each decision comprises a variability link element (VLE) which is included automatically into the variability model instance.

4. The method according to claim 3,
wherein the variability link element (VLE) is formed by an alternative choice cardinality indicating a minimum and a maximum number of selectable variants (V).

5. The method according to claim 3,
wherein the variability link element (VLE) is formed by a constraint dependency.

6. The method according to claim 3,
wherein the variability link element (VLE) is formed by a variability dependency.

7. The method according to claim 5,
wherein the constraint dependency indicates that a selection of a variation point (VP) or a variant (V) presumes the selection of another variation point (VP) or a variant (V) or indicates that a selection of a variation point (VP) or a variant (V) prohibits the selection of another variation point (VP) or variant (V).

8. The method according to claim 6,
wherein the variability dependency is formed by an optional variability dependency or by a mandatory variability dependency.

9. The method according to claim 3,
wherein the generated QOC-rational model instance comprises questions, options, criteria and arguments given by stakeholders.

10. The method according to claim 3,
wherein the derived justification matrix (JM) comprises for each combination of an option and of a criterion of the generated QOC-rational model instance an argument indicating a justification of the respective option to fulfil the respective criterion.

11. The method according to claim 3,
wherein the justification matrix comprises a rational for the variability link element (VLE).

12. The method according to claim 9,
wherein the criteria are non-functional requirements (NFR).

13. A data carrier which stores a computer program for performing the method according to claim 1.

14. An apparatus for processing a variability model of a product line,
wherein a decision is derived automatically on the basis of a predetermined negotiation model.

15. The method according to claim 1,
wherein a decision for a question (Q) on an instantiation for a variation point (VP) of a variability meta-model instance is generated on the basis of said predetermined negotiation model.

16. A method for performing a product instantiation on the basis of a variability meta model instance having variants (V) each describing an object of variation and variation points (VP) indicating a variability between the variants (V),
wherein said method comprises the steps of:
(a) generating a QOC-model instance of the product by
(a1) providing a question on an instantiation for each variation point (VP) of the variability meta model instance;
(a2) selecting automatically a subset of variants (V) of the respective variation point (VP) depending on constraint dependencies and on variability dependencies of the variability meta model instance;
(a3) generating automatically an option for each variant (V) of the selected subset of said variants (V);
(a4) and by eliciting criteria for the product instantiation and deriving arguments for the elicited criteria and generated options;
(b) transforming the generated QOC-model instance for the product into a corresponding justification matrix (JM) which comprises for each combination of an option and of a criterion an argument indicating a justification of the respective option to fulfil the corresponding criterion; and
(c) generating a decision for the provided question (Q) from the justification matrix (JM),
wherein the decision comprises instantiated variants (V).

17. A Method according to claim 16,
wherein the criteria for the product instantiation are product specific non-functional requirements (NFR).

18. A data carrier for storing a computer program for performing the method according to claim 16.

19. The apparatus according to claim 14,
wherein the decision is derived on the basis of a QOC-rationale model instance and comprises a variability link element (VLE) which is included automatically into a variability model instance.

20. An apparatus identifying an instance of a variability meta-model (VMM) which models a variabilty in domain requirements,
wherein said apparatus comprises:
(a) means for providing at least one set of variants (V) each describing an object of variation having a corresponding variation point (VP) indicating a variability between said variants (V),
wherein each variant (V) is connected to at least one domain requirement;
(b) means for generating QOC-rationale model instances is related to said domain requirements;
(c) means for deriving a justification matrix (JM) for each generated QOC-rational model instance; and
(d) means for generating a decision for each justification matrix (JM),
wherein each decision comprises a variability link element (VLE) which is included automatically into the variability model instance.

21. The apparatus according to claim 14,
wherein the decision is derived on the basis of a QOC-rationale model instance and comprise instantiated variants (V) of a variability model instance.

22. An apparatus for performing a product instantiation on the basis of a variability model instance having variants (V) each describing an object of variation and variation points (VP) indicating a variability between the variants (V),
wherein said apparatus comprises:
(a) means for generating a QOC-model instance of the product having:
(a1) means for providing a question on an instantiation for each variation point (VP) of the variability meta-model instance;
(a2) means for selecting automatically a sub-set of variants (V) of the respective variation point (VP) depending on constraint dependencies and on variability dependencies of the variability meta-model instance;
(a3) means for generating automatically an option for each variant (V) of the selected sub-set of said variants (V);
(a4) and means for eliciting criteria for the product instantiation and deriving arguments for the elicited criteria and generated options;
(b) means for transforming the generated QOC-model instance for the product into a corresponding justification matrix (JM) which comprises for each combination of an option and of a criterion an argument indicating a justification of the respective option to fulfil the corresponding criterion;
(c) means for generating a decision for the provided question (Q) from the justification matrix (JM),
wherein the decision comprises instantiated variants (V).

23. The method according to claim 1,
wherein change requests (CR) to change a variability model (VM) of a product line (PL) are processed to derive a decision whether to accept one or more of said change requests (CR) on the basis of said predetermined negotiation model.

24. A method for processing change requests (CR) to change a variability model (VM) of a product line (PL) comprising the steps of:
(a) selecting a change request (CR) of stakeholders;
(b) deriving evolution criteria (EC) for evolution of the variability model (VM) using a negotiation model;
(c) inputting arguments by stakeholders into a justification matrix (JM) generated for the selected change requests (CR) and the derived evolution criteria (EC); and
(d) evaluating said justification matrix (JM) to derive a decision whether to accept one or more of said change requests (CR).

25. The method according to claim 24,
wherein change requests (CR) are selected according to their priorities by a project manager of said product line (PL).

26. The method according to claim 24,
wherein the negotiation model is formed by a questions, options and criteria (QOC) EasyWinWin model.

27. The method according to claim 24,
wherein the variability model (VM) is updated automatically depending on the derived decision.

28. An apparatus according to claim 14,
wherein the decision is derived on the basis of a QOC-EasyWinWin model and indicates whether to accept one or more change requests (CR) to change the variability model (VM) of said product line (PL).

29. An apparatus for processing change requests (CR) to change a variability model (VM) of a product line (PL), the apparatus comprising:
(a) means for selecting change requests (CR) by stakeholders;
(b) means for deriving evolution criteria (EC) for evolution of the variability model (VM) using a negotiation model;
(c) means for inputting arguments by stakeholders into a justification matrix (JM) generated for the selected change requests (CR) and the derived evolution criteria (EC); and
(d) means for evaluating said justification matrix (JM) to derive a decision whether to accept one or more of said change requests (CR).

30. A distributed computer system for processing change requests (CR) to change a variability model (VM) of a product line (PL),
wherein a decision whether to accept one or more of said change requests (CR) is derived on the basis of a negotiation model.

31. The distributed computer system according to claim 30,
wherein the negotiation model is a questions, options and criteria (QOC) EasyWinWin model.
